(19) Europäisches Patentamt
European Patent Office
Office européen des brevets

(11) EP 1 829 903 B1

(12) **EUROPEAN PATENT SPECIFICATION**

(45) Date of publication and mention of the grant of the patent:
**13.02.2013 Bulletin 2013/07**

(21) Application number: **05822700.0**

(22) Date of filing: **22.12.2005**

(51) Int Cl.:
***C08F 210/16*** (2006.01) ***C08F 210/06*** (2006.01)
***C08F 297/08*** (2006.01) ***C08L 23/10*** (2006.01)
***C08F 4/6592*** (2006.01) ***C08L 23/14*** (2006.01)
***C08L 51/06*** (2006.01) ***C08J 5/18*** (2006.01)

(86) International application number:
**PCT/JP2005/024163**

(87) International publication number:
**WO 2006/068308 (29.06.2006 Gazette 2006/26)**

(54) **PROPYLENE POLYMER, COMPOSITION CONTAINING THE POLYMER, AND MOLDED OBJECTS OBTAINED FROM THESE**

PROPYLENPOLYMER, DAS POLYMER ENTHALTENDE ZUSAMMENSETZUNG UND DARAUS ERHALTENE FORMKÖRPER

POLYMERE DU PROPYLENE, COMPOSITION LE CONTENANT ET OBJETS MOULES OBTENUS A PARTIR DU POLYMERE ET DE LA COMPOSITION

(84) Designated Contracting States:
**DE FR GB IT**

(30) Priority: **22.12.2004 JP 2004370457**
**30.09.2005 JP 2005285953**

(43) Date of publication of application:
**05.09.2007 Bulletin 2007/36**

(73) Proprietor: **Mitsui Chemicals, Inc.**
**Tokyo 105-7117 (JP)**

(72) Inventors:
- **ITAKURA, Keita**
**Sodegaura-shi, Chiba 2990265 (JP)**
- **FUNAYA, Munehito**
**Sodegaura-shi, Chiba 2990265 (JP)**
- **KADOSAKA, Ayako**
**Sodegaura-shi, Chiba 2990265 (JP)**
- **HIROTA, Naritoshi**
**Sodegaura-shi, Chiba 2990265 (JP)**
- **NISHIKAWA, Hiroshi**
**Ichihara-shi, Chiba 2990108 (JP)**
- **YAMAMURA, Yuichi**
**Sodegaura-shi, Chiba 2990265 (JP)**
- **MATSUMURA, Shuji**
**Takaishi-shi, Osaka 5928501 (JP)**
- **HASHIZUME, Satoshi**
**Takaishi-shi, Osaka 5928501 (JP)**
- **SASAKI, Yoshio**
**Takaishi-shi, Osaka 5928501 (JP)**

(74) Representative: **HOFFMANN EITLE**
**Patent- und Rechtsanwälte**
**Arabellastrasse 4**
**81925 München (DE)**

(56) References cited:
**EP-A1- 1 454 931** **WO-A1-98/50395**
**WO-A1-99/07747** **DE-A1- 19 850 898**
**JP-A- 05 202 152** **JP-A- 11 349 649**
**JP-A- 2001 525 801** **JP-A- 2003 206 325**
**JP-A- 2004 051 801**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 829 903 B1

## Description

### Technical Field

The present invention relates to a film or sheet obtained from a propylene copolymer, and to a retort pouch comprising the film or sheet.

### Background Art

Highly crystalline polypropylene obtained by polymerizing propylene with a Ziegler catalyst is used as a material having rigidity and heat resistance as thermoplastic resin in wide applications.

For using the highly crystalline polypropylene in a field requiring impact resistance, a propylene/ethylene block copolymer has been developed for example by continuously polymerizing propylene alone or a mixture of propylene and a small amount of ethylene in a former stage and then continuously copolymerizing propylene with ethylene in a latter stage (in the following description, "propylene/ethylene block copolymer" is referred to sometimes as "block polypropylene"). In the polymerization method using a Ziegler catalyst, however, not only the desired polymer that is a propylene/ethylene copolymer soluble in solvents such as n-decane or p-xylene, but also a propylene/ethylene copolymer, an ethylene homopolymer and a propylene homopolymer insoluble in these solvents, are formed as byproducts in the latter stage of copolymerizing propylene with ethylene. These solvent-insoluble components produced as byproducts in the step of copolymerizing propylene with ethylene are known to cause deterioration in physical properties such as impact resistance of the propylene copolymer.

To reduce the amount of these solvent-insoluble components formed as byproducts, a method of producing block polypropylene by using a metallocene catalyst is actively developed. Japanese Patent Application Laid-Open No. 5-202152 and Japanese Patent Application Laid-Open No. 2003-147035 disclose that a metallocene catalyst can be used for considerably reducing the amount of byproducts, such as propylene/ethylene copolymers insoluble in n-decane or p-xylene, in the latter copolymerization step, thereby improving impact resistance, but the method disclosed therein cannot be said to cope with the balance between impact resistance and rigidity in various industrial fields, and there is demand for further improvements.

The tendency toward diversification and higher level in industrial fields using plastics brings about the advent of application fields not satisfied even with heat resistance and rigidity achieved as excellent performance of the conventional polypropylene. In other words, there are appearing many industrial fields which cannot be dealt with the existing propylene resin only. Byway of example, the following two fields are presented: one is directed to retort film and the other to injection molding for automotive material.

In recent years, retort food is rapidly becoming widely used not only at home but also in business field, thus necessitating a packaging material (retort pouch) capable of packaging a large amount of food all together. The retort food is generally stored at ambient temperatures or kept in a refrigerator or a freezer for a prolonged period, and thus the film used in its packaging material needs high heat-sealing strength and resistance to impact at low temperatures in order to prevent breakage at a heat sealed portion of the package. However, a blend film consisting of polypropylene and ethylene/α-olefin copolymer rubber, a polypropylene block copolymer film, or a blend film consisting of a polypropylene block copolymer and ethylene/α-olefin copolymer rubber, which have been used conventionally as a sealant layer of a retort pouch, are hardly said to be excellent in balance among heat resistance, resistance to impact at low temperatures and heat sealing properties out of key performance requirements. In the retort food, the food is packed and sealed and then subjected to retort sterilization treatment in a high-temperature and high-pressure boiler at about 100 to 140°C, so the heat resistance and heat sealing strength of the heat-sealed portion durable to such treatment are also required from the viewpoint of the quality control of food. Sterilization at high temperatures for a short time leads not only to improvement in working efficiency but also to improvement in the food survival rate of the content, and thus further improvements in the allowable temperature limit of propylene resin used as a sealant layer for a retort pouch etc. are demanded in the industrial field.

The propylene resin, for its excellent rigidity, hardness and heat resistance, is used widely in automobile interior applications and automobile exterior applications such as a fender, bumper, side molding, mudguard, mirror cover etc. by injection molding. Depending on use, a polypropylene composition with impact resistance improved by compounding propylene resin with polyethylene or a rubber component, an amorphous or low-crystalline ethylene/propylene copolymer (EPR), an amorphous ethylene/α-olefin copolymer, etc., a polypropylene composition having inorganic fillers such as talc added for compensating for rigidity reduced upon compounding with a rubber component, etc. are also known. In such propylene resin, however, there is demand for further weight saving and thinner wall of a molded product. For obtaining a molded product realizing such performance and simultaneously having sufficient strength, propylene resin with further improvement in the balance between rigidity and impact resistance (that is, excellent in both rigidity and impact resistance) or a propylene resin composition comprising the resin is required.

One document dealing with polypropylene polymers is JP-A 2004-051801, yet the polymer does not fulfill the requirements [1] - [5] and [1'] - [4'] recited in claim 1.

The present invention was made in view of the related art described above, and the object of the present invention is to provide propylene resin excellent in heat resistance, also excellent in both rigidity and impact resistance, and particularly suitably usable in a film and an injection molded product, a resin composition comprising the resin, and a molded product obtained therefrom.

Disclosure of Invention

The present invention relates to a film or sheet obtained by molding a propylene polymer (A) consisting of 10 to 40 wt% room-temperature n-decane soluble part ($D_{sol}$) and 60 to 90 wt% room-temperature n-decane insoluble part ($D_{insol}$) comprising skeletons derived from propylene (MP) and at least one kind of olefin (MX) selected from ethylene and C4 or more $\alpha$-olefins, and satisfying all of the following requirements [1] to [5] and [1'] to [4'] recited in claim 1:

[1] the molecular weight distribution (Mw/Mn) of both $D_{sol}$ and $D_{insol}$ as determined by GPC is 4.0 or less;
[2] the melting point (Tm) of $D_{insol}$ is 156°C or more;
[3] the sum of the 2,1-bond content and the 1, 3-bond content in $D_{insol}$ is 0.05 mol% or less;
[4] the intrinsic viscosity [$\eta$] (dl/g) of $D_{sol}$ satisfies the relationship $2.2 < [\eta] \leq 6.0$; and
[5] the concentration of skeletons derived from the olefin (MX) in $D_{insol}$ is 3.0 wt% or less.

In a preferable aspect, the propylene polymer (A) of the present invention is a propylene polymer (A1), which is obtained by carrying out the following two steps (steps 1 and 2) successively:

[Step 1] step wherein propylene (MP), and if necessary at least one kind of olefin (MX) selected from ethylene and C4 or more $\alpha$-olefins, are (co)polymerized in the presence of a catalyst containing a metallocene compound, thereby producing a (co)polymer wherein the concentration of room-temperature n-decane soluble part ($D_{sol}$) is 0.5 wt% or less, and
[Step 2] step wherein propylene (MP) and at least one kind of olefin (MX) selected from ethylene and C4 or more $\alpha$-olefins are copolymerized in the presence of a catalyst containing a metallocene compound, thereby producing a copolymer wherein room-temperature n-decane insoluble part ($D_{insol}$) is 5.0 wt% or less.

In a preferable aspect, the catalyst for producing the propylene polymer (A) of the present invention is a catalyst comprising a metallocene compound represented by the following general formula [I]:

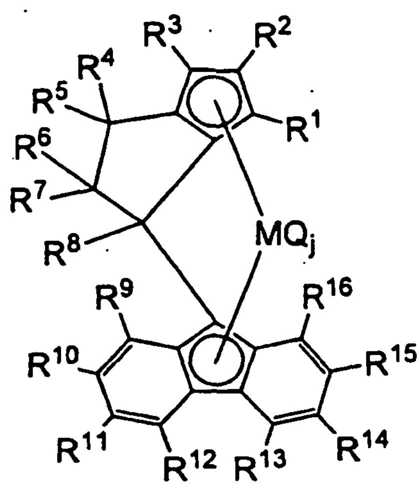

[I] wherein $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$ and $R^{16}$ are selected from a hydrogen atom, a hydrocarbon group and a silicon-containing group and may be the same or different, and the adjacent groups $R^1$ to $R^{16}$ may be bound to one another to form a ring, provided that $R^2$ is not an aryl group; M is the group IV transition metal; Q is selected from the group consisting of a halogen atom, a hydrocarbon group, an anion ligand, and a neutral ligand capable of coordination with a lone pair of electrons; j is an integer of 1 to 4, and when j is an integer of 2 or more, a plurality of Qs may be the same or different.

Best Mode for Carrying Out the Invention

Hereinafter, the best mode for carrying out the invention is described in detail by reference to the propylene polymer (A), the method of producing the propylene polymer (A), and applications thereof in this order.

Propylene polymer (A)

The propylene polymer (A) is a propylene polymer consisting of 10 to 40 wt%, preferably 10 to 30 wt%, room-temperature n-decane soluble part ($D_{sol}$) and 60 to 90 wt%, preferably 70 to 90 wt%, room-temperature n-decane insoluble part ($D_{insol}$), provided that the sum of $D_{sol}$ and $D_{insol}$ is 100 wt%, comprising skeletons derived from propylene (MP) and at least one kind of olefin (MX) selected from ethylene and C4 or more $\alpha$-olefins, and satisfying all of requirements [1] to [5] and [1'] to [4'] described later. In the present invention, the "room-temperature n-decane soluble part" refers to the part of the polypropylene polymer (A) which after dissolved by heating at 145°C for 30 minutes in n-decane and then cooled to 20°C, remains dissolved in n-decane, as described in detail in the Examples described later. In the following description, the "room-temperature n-decane soluble part" and "room-temperature n-decane insoluble part" are abbreviated sometimes as "n-decane soluble part" and "n-decane insoluble part", respectively.

The propylene polymer (A) is composed of a skeleton derived from propylene (MP) as an essential skeleton and a skeleton derived from at least one kind of olefin (MX) selected from ethylene and C4 or more $\alpha$-olefins. The C4 or more $\alpha$-olefins (hereinafter referred to sometimes as merely "$\alpha$-olefins") are preferably C4 or more $\alpha$-olefins composed exclusively of carbon atoms and hydrogen atoms, and examples of such $\alpha$-olefins include 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicocene etc. When the $\alpha$-olefin is used, it is preferably at least one member selected from 1-butene, 1-hexene and 4-methyl-l-pentene.

[1] the molecular weight distribution (Mw/Mn) of both $D_{sol}$ and $D_{insol}$ as determined by GPC is 4.0 or less;
[2] the melting point (Tm) of $D_{insol}$ is 156°C or more;
[3] the sum of the 2,1-bond content and the 1, 3-bond content in $D_{insol}$ is 0.05 mol% or less;
[4] the intrinsic viscosity $[\eta]$ (dl/g) of $D_{sol}$ satisfies the relationship $2.2 < [\eta] \leq 6.0$; and
[5] the concentration of skeletons derived from the olefin (MX) in $D_{insol}$ is 3.0 wt% or less.

Hereinafter, the requirements [1] to [5] of the propylene polymer (A) are described in detail.

Requirement [1]

The molecular-weight distribution (Mw/Mn) of both n-decane soluble part ($D_{sol}$) and n-decane insoluble part ($D_{insol}$) in the propylene polymer (A), as determined by GPC, is 4.0 or less. The molecular-weight distribution of $D_{sol}$ is preferably 3.5 or less, more preferably 3.0 or less. The molecular-weight distribution of $D_{insol}$ is preferably 3. 5 or less, more preferably 3.0 or less. Mw is weight-average molecular weight, and Mn is number-average molecular weight.

Requirement [2]

The melting point (Tm) of n-decane insoluble part ($D_{insol}$) in the propylene polymer (A) is 156°C or more, preferably $156°C \leq Tm \leq 167°C$, more preferably $158°C \leq Tm \leq 165°C$. A Tm of less than 156°C is not preferable because rigidity is lowered and the heat resistance of the propylene polymer in the form of a film may not guarantee demand characteristics in some fields.

Requirement [3]

The sum of positionally irregular units based on 2,1-insertion and 1,3-insertion (referred to as "2,1-bond content" and "1,3-bond content" respectively) of propylene monomers in all propylene units in the n-decane insoluble part ($D_{insol}$) of the propylene polymer (A) as determined from $^{13}$C-NMR spectrum, is 0.05 mol% or less, preferably 0.04 mol% or less, still more preferably 0.02 mol% or less. When the sum of the 2,1-bond content and 1,3-bond content in the n-decane insoluble part ($D_{insol}$) of the propylene polymer (A1) of the present invention, as determined from $^{13}$C-NMR spectrum, is higher than 0.05 mol%, the 2,1-bond content and 1,3-bond content in the n-decane soluble part ($D_{sol}$) of the propylene polymer (Al) are also increased, and the compositional distribution of the n-decane soluble part ($D_{sol}$) is broadened to sometimes lower impact resistance.

Requirement [4]

The intrinsic viscosity [η] (dl/g) of n-decane soluble ($D_{sol}$) in the propylene polymer (A) of the present invention usually satisfies the relationship 2.2 < [η] ≤ 6.0. Generally, when the intrinsic viscosity [η] of the n-decane soluble part ($D_{sol}$) is increased, the characteristics of the propylene polymer (A) are expected to be excellent, but in most of applications intended by the present invention, the propylene polymer satisfying the relationship 2.2 < [≤] ≤ 5.0, preferably 2.2 < [η] ≤ 4.5, is preferably used.

Requirement [5]

The weight concentration of skeletons derived from at least one kind of olefin (MX) selected from ethylene and C4 or more α-olefins, in n-decane insoluble part ($D_{insol}$) of the propylene polymer (A) of the present invention, is usually 3. 0 wt% or less, preferably 2.0 wt% or less, more preferably 1.5 wt% or less.

The propylene polymer (A) satisfies simultaneously the following requirements [1'] to [4']:

Requirement [1']

The ratio Mw/Mn of the weight-average molecular weight (Mw) to the number-average molecular weight (Mn) of the component soluble in orthodichlorobenzene at 0°C is 1. 0 to 4. 0, preferably 1. 0 to 3. 5, more preferably 1. 0 to 3. 0. When the Mw/Mn is greater than 4.0, resistance to low-temperature embrittlement is sometimes deteriorated.

Requirement [2']

The weight-average molecular weight (Mw) of the component soluble in orthodichlorobenzene at 0°C is $1.8\times10^5$ or more, preferably $2.0\times10^5$ or more, more preferably $2.5\times10^5$. When the Mw is lower than $1.8\times10^5$, impact resistance is sometimes lowered.

Requirement [3']

The ratio Mw/Mn of the weight-average molecular weight (Mw) to the number-averagemolecular weight (Mn) of the component insoluble in orthodichlorobenzene at 90°C and soluble in orthodichlorobenzene at 135°C is 1.0 to 4.0, preferably 2.0 to 3.5.

Requirement [4']

The skeletons, in $D_{sol}$, derived from at least one kind of olefin (MX) selected from ethylene and C4 or more α-olefins (MX) contain an ethylene-derived skeleton as an essential component, and the ethylene-derived skeleton is contained in $D_{sol}$ in an amount of preferably 15 mol% to 90 mol%, more preferably 20 mol% to 70 mol%, still more preferably 25 mol% to 60 mol%. When the concentration of the ethylene-derived skeleton is lower than 15 mol% or higher than 90 mol%, impact resistance may be not sufficiently exhibited.

<u>Method of Producing Propylene Polymer (A)</u>

The method of producing the propylene polymer (A) is not particularly limited insofar as the requirements described above are satisfied. According to another finding of the inventors, the n-decane insoluble part ($D_{insol}$) constituting the propylene polymer (A) is substantially identical with a propylene homopolymer, a propylene random polymer (propylene polymer containing up to 1.5 mol% skeleton derived from ethylene or a C4 or more α-olefin) or a mixture of two or more of the above, while the n-decane soluble part ($D_{sol}$) is substantially identical with a propylene/ethylene copolymer, a propylene/α-olefin copolymer, an ethylene/α-olefin copolymer, or a mixture of two or more of the above ("copolymer" includes a random polymer). Accordingly, the propylene polymer (A) can be produced mainly by either of the following production methods.

Method A: A method wherein the following two steps (steps 1 and 2) are successively carried out thereby producing the propylene polymer (A) satisfying all of the requirements [1] to [5] and [1'] to [4'] (Hereinafter, this method is referred to as "direct polymerization method", and the propylene polymer (A) produced by this method is referred to sometimes as propylene polymer (A1).)

[Step 1] Step wherein propylene (MP), and if necessary at least one kind of olefin (MX) selected from ethylene

and C4 or more $\alpha$-olefins, are (co)polymerized in the presence of a catalyst containing a metallocene compound, thereby producing a (co)polymer wherein the concentration of room-temperature n-decane soluble part ($D_{sol}$) is 0.5 wt% or less (hereinafter, this (co) polymer is referred to sometimes as copolymer [a1].).
[Step 2] Step wherein propylene (MP) and at least one kind of olefin (MX) selected from ethylene and C4 or more $\alpha$-olefins are copolymerized in the presence of a catalyst containing a metallocene compound, thereby producing a copolymer wherein room-temperature n-decane insoluble part ($D_{insol}$) is 5.0 wt% or less (hereinafter, this (co)polymer is referred to sometimes as copolymer [a2].).

Method B: A method wherein a (co) polymer (= polymer [a1]) formed in step 1 in Method A and a copolymer (= polymer [a2]) formed in step 2 in Method A are produced separately in the presence of a catalyst containing a metallocene compound and then blended with each other by a physical means. (Hereinafter, this method is referred to as "blending method", and the propylene polymer (A) produced by this method is referred to sometimes as propylene polymer (A2).)

The metallocene compound-containing catalyst used in common in Methods A and B is specifically a catalyst containing a metallocene compound [m] represented by the following general formula [I].:

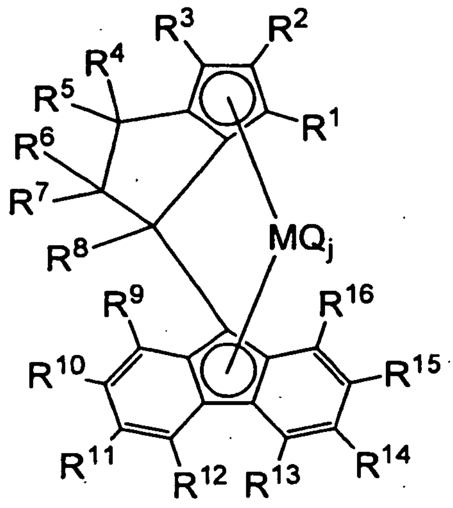

• • • • [I]

In a preferable aspect, the catalyst containing the metallocene compound [m] comprises:

[m] metallocene compound represented by the general formula [I],
[k] at least one kind of compound selected from [k-1] organometallic compound, [k-2] organoaluminum oxy compound, and [k-3] compound reacting with the metallocene compound [m] to form an ion pair, and
[s] particulate catalyst support if necessary.

Hereinafter, the components [m], [k] and [s] constituting the polymerization catalyst according to the present invention are described in detail.

Component [m]

Component [m] is a metallocene compound represented by the general formula [I] above. In the general formula [I], $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$ and $R^{16}$ are selected from a hydrogen atom, a hydrocarbon group and a silicon-containing group and may be the same or different, and the adjacent groups $R^1$ to $R^{16}$ may be bound to one another to form a ring, provided that $R^2$ is not an aryl group. As used herein, the aryl group refers to a substituent having free atomic valence on conjugated $sp^2$ carbon in an aromatic hydrocarbon group, and examples include a phenyl group, tolyl group, naphthyl group etc., and do not include a benzyl group, phenethyl group, phenyldimethylsilyl group etc. The hydrocarbon group includes linear hydrocarbon groups such as a methyl group, ethyl group, n-propyl group, allyl group, n-butyl group, n-pentyl group, n-hexyl group, n-heptyl group, n-octyl group, n-nonyl group and n-decanyl group; branched hydrocarbon groups such as an isopropyl group, tert-butyl group, amyl group, 3-methylpentyl group, 1,1-diethylpropyl group, 1,1-dimethylbutyl group, 1-methyl-1-propylbutyl group, 1,1-propylbutyl group, 1,1-dimethyl-2-methylpropyl group and 1-methyl-1-isopropyl-2-methylpropyl group; cyclic saturated hydrocarbon groups

such as a cyclopentyl group, cyclohexyl group, cycloheptyl group, cyclooctyl group, norbornylgroup,adamantyl group, methylcyclohexyl group andmethyladamantyl group; cyclic unsaturated hydrocarbon groups such as a phenyl group, tolyl group, naphthyl group, biphenyl group, phenanthryl group and anthracenyl group; cyclic unsaturated hydrocarbon group-substituted saturated hydrocarbon groups such as a benzyl group, cumyl group, 1,1-diphenylethyl group and triphenylmethyl group; and heteroatom-containing hydrocarbon groups such as a methoxy group, ethoxy group, phenoxy group, furyl group, N-methylamino group, N,N-dimethylamino group, N-phenylamino group, pyryl group and thienyl group. The silicon-containing group can include a trimethylsilyl group, triethylsilyl group, dimethylphenylsilyl group, diphenylmethylsilyl group, triphenylsilyl group etc. The adjacent substituents $R^9$ to $R^{16}$ on the fluorenyl group may be bound to one another to form a ring. Such substituted fluorenyl group can include a benzofluorenyl group, dibenzofluorenyl group, octahydrodibenzofluorenyl group, octamethyloctahydrodibenzofluorenyl group, octamethyltetrahydrodicyclopentafluorenyl group etc.

In the general formula [I], each of $R^1$ and $R^3$ is preferably a hydrogen atom. $R^6$ and/or $R^7$ are/is preferably a hydrogen atom, and each of $R^6$ and $R^7$ is more preferably a hydrogen atom.

In the general formula [I], $R^2$ with which the cyclopentadienyl group is substituted is preferably not an aryl group but a hydrogen atom or a C1 to C20 hydrocarbon group. The C1 to C20 hydrocarbon group can be exemplified by the hydrocarbon groups mentioned above. $R^2$ is preferably a hydrocarbon group which is preferably a methyl group, ethyl group, isopropyl group or tert-butyl group, particularly preferably a tert-butyl group.

Each of $R^4$ and $R^5$ is selected from a hydrogen atom, a C1 to C20 alkyl group and an aryl group, and is preferably a C1 to C20 hydrocarbon group. Each of $R^4$ and $R^5$ is more preferably selected from a methyl group and a phenyl group, and particularly preferably $R^4$ and $R^5$ represent the same group.

In the general formula [I], each of $R^9$, $R^{12}$, $R^{13}$ and $R^{16}$ on the fluorene ring is preferably a hydrogen atom.

In the general formula [I], M is a transition metal in the IV group, specifically Ti, Zr, Hf etc. Q is selected from the group consisting of a halogen atom, a hydrocarbon group, an anion ligand, and a neutral ligand capable of coordination with a lone pair of electrons. j is an integer of 1 to 4, and when j is 2 or more, Q may be the same or different. Examples of the halogen atom include fluorine, chlorine, bromine and iodine, and examples of the hydrocarbon group include those described above. Examples of the anion ligand include an alkoxy group such as methoxy, tert-butoxy, phenoxy etc. , a carboxylate group such as acetate, benzoate etc., a sulfonate group such as mesylate, tosylate etc. , an amide group such as dimethyl amide, diisopropyl amide, methyl anilide, diphenyl amide etc. Specific examples of the neutral ligand capable of coordination with a lone pair of electrons include organic phosphorus compounds such as trimethyl phosphine, triethyl phosphine, triphenyl phosphine, diphenyl methyl phosphine etc., and ethers such as tetrahydrofuran, diethyl ether, dioxane, 1,2-dimethoxyethane etc. At least one of Qs is preferably a halogen atom or an alkyl group.

Examples of the metallocene compound represented by the general formula [I] in the present invention can include [3-(fluorenyl) (1,2,3,3a-tetrahydropentalene)] zirconium dichloride, [3-(2',7'-di-tert-butylfluorenyl) (1,2,3,3a-tetrahydropentalene)] zirconium dichloride, [3-(3',6'-di-tert-butylfluorenyl) (1,2,3,3a-tetrahydropentalene)] zirconium dichloride, [3-(1',1',4',4',7',7',10',10'-octamethyloctahydrodibenzo [b,h] fluorenyl) (1,2,3,3a-tetrahydropentalene)] zirconium dichloride, [3-(fluorenyl) (1,1,3,5-tetramethyl-1,2,3,3a-tetrahydropentalene)] zirconium dichloride, [3-(2',7'-di-tert-butylfluorenyl) (1,1,3,5-tetramethyl-1,2,3,3a-tetrahydropentalene)] zirconium dichloride, [3-(3',6'-di-tert-butylfluorenyl) (1,1,3,5-tetramethyl-1,2,3,3a-tetrahydropentalene)] zirconium dichloride, [3-(1',1',4',4',7',7',10',10'-octamethyloctahydrodibenzo [b,h] fluorenyl) (1,1,3,5-tetramethyl-1,2,3,3a-tetrahydropentalene)] zirconium dichloride, [3-(fluorenyl) (1,1-dimethyl-5-tert-butyl-1,2,3,3a-tetrahydropentalene)] zirconium dichloride, [3-(2',7'-di-tert-butylfluorenyl) (1,1-dimethyl-5-tert-butyl-1,2,3,3a-tetrahydropentalene)] zirconium dichloride, [3-(3',6'-di-tert-butylfluorenyl) (1,1-dimethyl-5-tert-butyl-1,2,3,3a-tetrahydropentalene)] zirconium dichloride, [3-(1',1',4',4',7',7',10',10'-octamethyloctahydrodibenzo [b,h] fluorenyl) (1,1-dimethyl-5-tert-butyl-1,2,3,3a-tetrahydropentalene)] zirconium dichloride, [3-(fluorenyl) (1,1,3-triethyl-2-methyl 5-tert-butyl-1,2,3,3a-tetrahydropentalene)] zirconium dichloride, [3-(2',7'-di-tert-butylfluorenyl) (1,1,3-triethyl-2-methyl 5-tert-butyl-1,2,3,3a-tetrahydropentalene)] zirconium dichloride, [3-(3',6'-di-tert-butylfluorenyl) (1,1,3-triethyl-2-methyl 5-tert-butyl-1,2,3,3a-tetrahydropentalene)] zirconium dichloride, [3-(1',1',4',4',7',7',10',10'-octamethyloctahydrodibenzo [b, h] fluorenyl) (1,1,3-triethyl-2-methyl 5-tert-butyl-1,2,3,3a-tetrahydropentalene)] zirconium dichloride, [3-(fluorenyl) (1,3-dimethyl-5-tert-butyl-1,2,3,3a-tetrahydropentalene)] zirconium dichloride, [3-(2',7'-di-tert-butylfluorenyl) (1,3-dimethyl-5-tert-butyl-1,2,3,3a-tetrahydropentalene)] zirconium dichloride, [3-(3',6'-di-tert-butylfluorenyl) (1,3-dimethyl-5-tert-butyl-1,2,3,3a-tetrahydropentalene)] zirconium dichloride, [3-(1',1',4',4',7',7',10',10'-octamethyloctahydrodibenzo [b,h] fluorenyl) (1,3-dimethyl-5-tert-butyl-1,2,3,3a-tetrahydropentalene)] zirconium dichloride, [3-(fluorenyl) (1,1,3-trimethyl-5-ethyl-1,2,3,3a-tetrahydropentalene)] zirconium dichloride, [3-(2',7'-di-tert-butylfluorenyl) (1,1,3-trimethyl-5-ethyl-1,2,3,3a-tetrahydropentalene)] zirconium dichloride, [3-(3',6'-di-tert-butylfluorenyl) (1,1,3-trimethyl-5-ethyl-1,2,3,3a-tetrahydropentalene)] zirconium dichloride, [3-(1',1',4',4',7',7',10',10'-octamethyloctahydrodibenzo [b,h] fluorenyl) (1,1,3-trimethyl-5-ethyl-1,2,3,3a-tetrahydropentalene)] zirconium dichloride, [3-(fluorenyl) (1,1,3-trimethyl-5-trimethylsilyl-1,2,3,3a-tetrahydropental ene)] zirconium dichloride, [3-(2',7'-di-tert-butylfluorenyl) (1,1,3-trimethyl-5-trimethylsilyl-1,2,3,3a-tetrahydropental ene)] zirconium dichloride, [3-(3',6''-di-tert-butylfluorenyl) (1,1,3-trimethyl-5-trimethylsilyl-1,2,3,3a-tetrahydropental ene)] zirconium dichloride, [3-(1',1',4',4',7',7',10',10'-octamethyloctahydrodibenzo [b,h] fluorenyl) (1,1,3-trimethyl-5-trimethylsilyl-1,2,3,3a-tetrahydropental ene)] zirconium dichloride, [3-(fluorenyl) (3-methyl-5-tert-butyl-1,2,3,3a-tetrahydropentalene)] zirconium dichloride, [3-(2',7'-di-tert-butylfluorenyl) (3-methyl-5-tert-butyl-1,2,3,3a-tetrahydropentalene)] zirconium dichloride, [3-(3',6'-di-tert-butylfluorenyl) (3-methyl-5-tert-butyl-1,2,3,3a-tetrahydropentalene)] zirconium dichloride, [3-(1',1',4',4',7',7',10',10'-octamethyloctahydrodibenzo [b,h] fluorenyl) (3-methyl-5-tert-butyl-1,2,3,3a-tetrahydropentalene)] zirconium dichloride, [3-(fluorenyl) (1-phenyl-3-methyl-5-tert-butyl-1,2,3,3a-tetrahydropentalen e)] zirconium dichloride, [3-(2',7'-di-tert-butylfluorenyl) (1-phenyl-3-methyl-5-tert-butyl-1,2,3,3a-tetrahydropentalen e)] zirconium dichloride, [3-(3',6'-di-tert-butylfluorenyl) (1-phenyl-3-methyl-5-tert-butyl-1,2,3,3a-tetrahydropentalen e)] zirconium dichloride, [3-(1',1',4',4',7',7',10',10'-octamethyloctahydrodibenzo [b,h] fluorenyl) (1-phenyl-3-methyl-5-tert-butyl-1,2,3,3a-tetrahydropentalen e)] zirconium dichloride, [3-(fluorenyl) (1-p-tolyl-3-methyl-5-tert-butyl-1,2,3,3a-tetrahydropentale ne)] zirconium dichloride, [3-(2',7'-di-tert-butylfluorenyl) (1-p-tolyl-3-methyl-5-tert-butyl-1,2,3,3a-tetrahydropentale ne)] zirconium dichloride, [3-(3',6'-di-tert-butylfluorenyl) (1-p-tolyl-3-methyl-5-tert-butyl-1,2,3,3a-tetrahydropentale ne)] zirconium dichloride, [3-(1',1',4',4',7',7',10',10'-octamethyloctahydrodibenzo [b,h] fluorenyl) (1-p-tolyl-3-methyl-5-tert-butyl-1,2,3,3a-tetrahydropentale ne)] zirconium dichloride, [3-(fluorenyl) (1,3-diphenyl-5-tert-butyl-1,2,3,3a-tetrahydropentalene)] zirconium dichloride, [3-(2',7'-di-tert-butylfluorenyl) (1,3-diphenyl-5-tert-butyl-1,2,3,3a-tetrahydropentalene)] zirconium dichloride, [3-(3',6'-di-tert-butylfluorenyl) (1,3-diphenyl-5-tert-butyl-1,2,3,3a-tetrahydropentalene)] zirconium dichloride, [3-(1',1',4',4',7',7',10',10'-octamethyloctahydrodibenzo [b,h] fluorenyl) (1,3-diphenyl-5-tert-butyl-1,2,3,3a-tetrahydropentalene)] zirconium dichloride, [3-(fluorenyl) (1,3-diphenyl-1-methyl-5-tert-butyl-1,2,3,3a-tetrahydropent alene)] zirconium dichloride, [3-(2',7'-di-tert-butylfluorenyl) (1,3-diphenyl-1-methyl-5-tert-butyl-1,2,3,3a-tetrahydropent alene)] zirconium dichloride, [3-(3',6'-di-tert-butylfluorenyl) (1,3-diphenyl-1-methyl-5-tert-butyl-1,2,3,3a-tetrahydropent alene)] zirconium dichloride, [3-(1',1',4',4',7',7',10',10'-octamethyloctahydrodibenzo [b,h] fluorenyl) (1,3-diphenyl-1-methyl-5-tert-butyl-1,2,3,3a-tetrahydropent alene)] zirconium dichloride, [3-(fluorenyl) (1,3-di(p-tolyl)-1-methyl-5-tert-butyl-1,2,3,3a-tetrahydrop entalene)] zirconium dichloride, [3-(2',7'-di-tert-butylfluorenyl) (1,3-di(p-tolyl)-1-methyl-5-tert-butyl-1,2,3,3a-tetrahydrop entalene)] zirconium dichloride, [3-(3',6'-di-tert-butylfluorenyl) (1,3-di(p-tolyl)-1-methyl-5-tert-butyl-1,2,3,3a-tetrahydrop entalene)] zirconium dichloride, [3-(1',1',4',4',7',7',10',10'-octamethyloctahydrodibenzo [b,h] fluorenyl) (1,3-di(p-tolyl)-1-methyl-5-tert-butyl-1,2,3,3a-tetrahydrop entalene)] zirconium dichloride, [3-(fluorenyl) (3-phenyl-5-tert-butyl-1,2,3,3a-tetrahydropentalene)] zirconium dichloride, [3-(2',7'-di-tert-butylfluorenyl) (3-phenyl-5-tert-butyl-1,2,3,3a-tetrahydropentalene)] zirconium dichloride, [3-(3',6'-di-tert-butylfluorenyl) (3-phenyl-5-tert-butyl-1,2,3,3a-tetrahydropentalene)] zirconium dichloride, [3-(1',1',4',4',7',7',10',10'-octamethyloctahydrodibenzo [b,h] fluorenyl) (3-phenyl-5-tert-butyl-1,2,3,3a-tetrahydropentalene)] zirconium dichloride, [3-(fluorenyl) (1-methyl-3-phenyl-5-tert-butyl-1,2,3,3a-tetrahydropentalen e)] zirconium dichloride, [3-(2',7'-di-tert-butylfluorenyl) (1-methyl-3-phenyl-5-tert-butyl-1,2,3,3a-tetrahydropentalen e)] zirconium dichloride, [3-(3',6'-di-tert-butylfluorenyl) (1-methyl-3-phenyl-5-tert-butyl-1,2,3,3a-tetrahydropentalen e)] zirconium dichloride, [3-(1',1',4',4',7',7',10',10'-octamethyloctahydrodibenzo [b,h] fluorenyl) (1-methyl-3-phenyl-5-tert-butyl-1,2,3,3a-tetrahydropentalen e)] zirconium dichloride, [3-(fluorenyl) (1,1-dimethyl-3-phenyl-5-tert-butyl-1,2,3,3a-tetrahydropent alene)]-zirconium dichloride, [3-(2',7'-di-tert-butylfluorenyl) (1,1-dimethyl-3-phenyl-5-tert-butyl-1,2,3,3a-tetrahydropent alene)] zirconium dichloride, [3-(3',6'-di-tert-butylfluorenyl) (1,1-dimethyl-3-phenyl-5-tert-butyl-l,2,3,3a-tetrahydropent alene)] zirconium dichloride, [3-(1',1',4',4',7',7',10',10'-octamethyloctahydrodibenzo [b,h] fluorenyl) (1,1-dimethyl-3-phenyl-5-tert-butyl-1,2,3,3a-tetrahydropent alene)] zirconium dichloride, [3-(fluorenyl) (1,1,3-trimethyl-5-tert-butyl-1,2,3,3a-tetrahydropentalene) ] hafnium dichloride, [3-(2',7'-di-tert-butylfluorenyl) (1,1,3-trimethyl-5-tert-butyl-1,2,3,3a-tetrahydropentalene) ] hafnium dichloride, [3-(3',6'-di-tert-butylfluorenyl) (1,1,3-trimethyl-5-tert-butyl-1,2,3,3a-tetrahydropentalene) ] hafnium dichloride, [3-(1',1',4',4',7',7',10',10'-octamethyloctahydrodibenzo [b,h] fluorenyl) (1,1,3-trimethyl-5-tert-butyl-1,2,3,3a-tetrahydropentalene) ] hafnium dichloride, [3-(fluorenyl) (1,1,3-trimethyl-5-tert-butyl-1,2,3,3a-tetrahydropentalene) ] titanium dichloride, [3-(2',7'-di-tert-butylfluorenyl) (1,1,3-trimethyl-5-tert-butyl-1,2,3,3a-tetrahydropentalene) ] titanium dichloride, [3-(3',6'-di-tert-butylfluorenyl) (1,1,3-trimethyl-5-tert-butyl-1,2,3,3a-tetrahydropentalene) ] titanium dichloride, and [3-(1',1',4',4',7',7',10',10'-octamethyloctahydrodibenzo [b,h] fluorenyl) (1,1,3-trimethyl-5-tert-butyl-1,2,3,3a-tetrahydropentalene) ] titanium dichloride, among which particularly preferable compounds include [3-(fluorenyl) (1,1,3-trimethyl-5-tert-butyl-1,2,3,3a-tetrahydropentalene) ] zirconium dichloride, [3-(2',7'-di-tert-butylfluorenyl) (1,1,3-trimethyl-5-tert-butyl-1,2,3,3a-tetrahydropentalene) ] zirconium dichloride, [3-(3',6'-di-tert-butylfluorenyl) (1,1,3-trimethyl-5-tert-butyl-1,2,3,3a-tetrahydropentalene) ] zirconium dichloride, and [3-(1',1',4',4',7',7',10',10'-octamethyloctahydrodibenzo [b, h] fluorenyl) (1,1,3-trimethyl-5-tert-butyl-1,2,3,3a-tetrahydropentalene) ] zirconium dichloride. The metallocene compound [m] of the present invention is not limited to the above exemplary compounds, and encompasses all compounds satisfying requirements defined in the claims. The position numbers used in the nomenclature of the above compounds are shown in the following formulae [I'] and [I''] by reference to [3-(1',1',4',4',7',7',10',10'-octamethyloctahydrodibenzo [b,h] fluorenyl) (1,1,3-trimethyl-5-tert-butyl-1,2,3,3a-tetrahydropentalene) ] zirconium dichloride and [3-(2',7'-di-tert-butylfluorenyl) (1,1,3-trimethyl-5-tert-butyl-1,2,3,3a-tetrahydropentalene) ] zirconium dichloride.

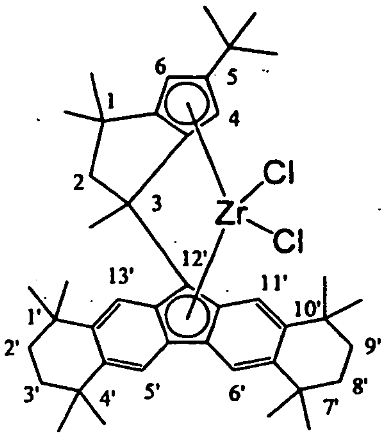

・・・・[I']

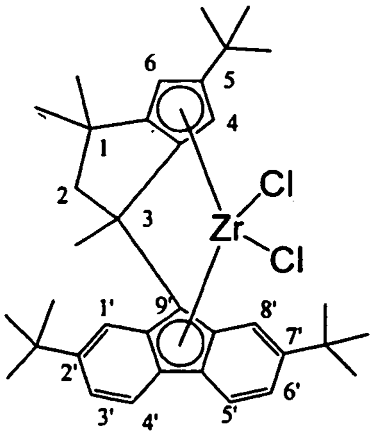

・・・・[I'']

When the method A or B is used in producing the propylene polymer (A) of the present invention, the metallocene compound is not limited to the metallocene compound [m] represented by the general formula [I]. Specifically, when the method B is used, a (co) polymer corresponding to polymer [a1] can be produced in the presence of a polymerization catalyst containing metallocene compound [m'] disclosed in International Application WO2002/074855 filed by the present applicant, and a copolymer corresponding to polymer [a2] can be produced in the presence of a polymerization catalyst containing metallocene compound [m''] disclosed in International Application WO2004/087775 filed by the present applicant. Specifically, when the method A is used, the propylene polymer of the present invention can be obtained by polymerization in step 1 in the presence of a polymerization catalyst containing the metallocene compound [m'] and then charging a polymerizer in step 2 with a polymerization catalyst containing the metallocene compound [m'']. Actually, in the Examples below, isopropyl (3-tert-butyl-5-methylcyclopentadienyl) (3,6-di-tert-butylfluorenyl) zirconium dichloride was used as [m'], and diphenylmethylene (3-tert-butyl-5-methylcyclopentadienyl) (2,7-di-tert-butylfluorenyl) zirconium dichloride was used as [m'']. In the present invention, the type of the metallocene compound-containing catalyst and the method of producing the same are not particularly limited insofar as the requirements [1] to [5] and additionally the requirements [1'] to [4'] , are satisfied by the propylene polymer.

When there are continuous production facilities wherein the steps 1 and 2 can be continuously carried out, a direct polymerization method wherein a catalyst containing the metallocene compound [m] represented by the general formula [I] applicable to both the steps 1 and 2 is used in common in the steps 1 and 2 is preferably used because it is economical and mass-production is feasible. On the other hand, when the above continuous production facilities are not present and simultaneously a desired amount of the propylene polymer (A) is not large, a blending method using a catalyst containing a metallocene compound selected suitably from the metallocene compound [m], metallocene compound [m'] and metallocene compound [m''] can be used. These will be determined depending on circumstances inherent in manufacturer and consumer.

The metallocene compound can be produced by methods known in the art, and the production method is not particularly limited. For example, a compound represented by the general formula [1] can be produced by the following step. The compound represented by the general formula (1), serving as a precursor of the compound represented by the general formula [I], can be produced by the following reaction scheme 1:

[Scheme 1]

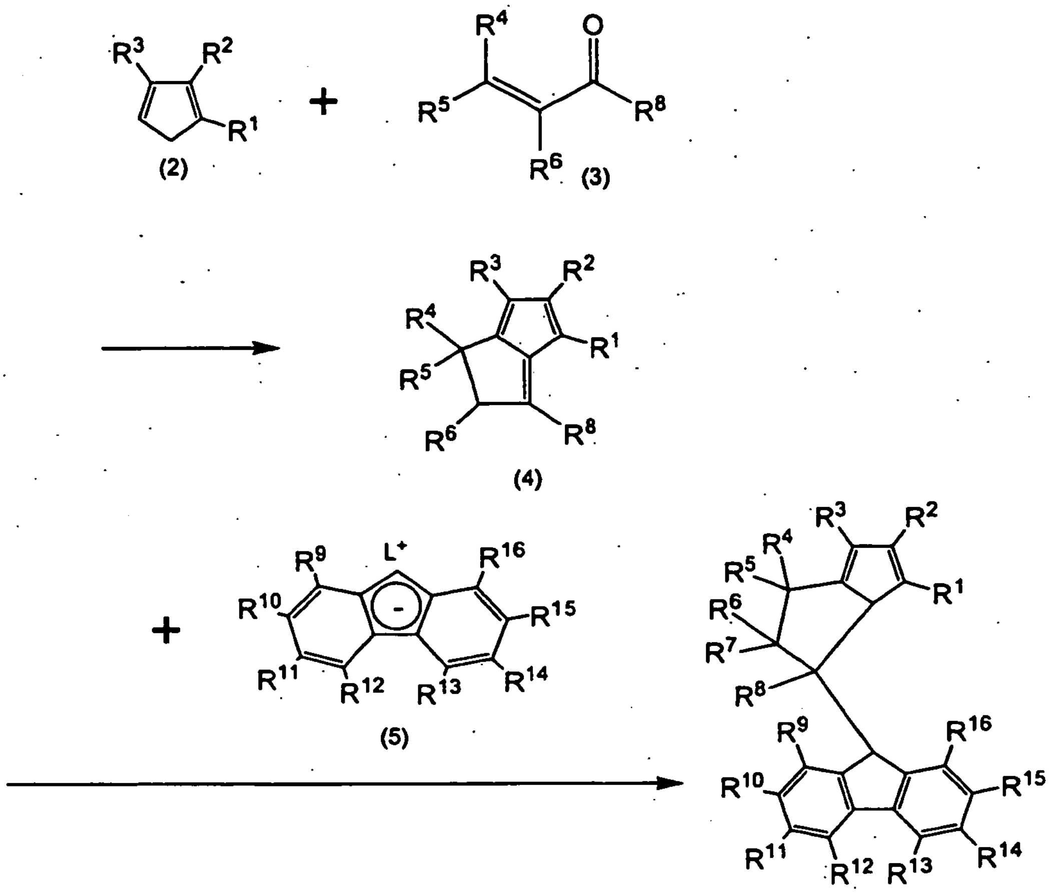

(2) (3) (4) (5) (1)

In the reaction scheme 1, $R^1$ to $R^6$ and $R^8$ to $R^{16}$ are the same as in the general formula [I], $R^7$ is a hydrogen atom, and L is an alkali metal or alkaline earth metal salt. In the reaction scheme 1, compounds represented by the formula (1), (2) or (5) may be isomers different only in the positions of double bonds in the cyclopentadienyl ring or may be a mixture thereof. In the reaction scheme 1, only one of such compounds is illustrated.

The compound (5) used in the reaction scheme 1 is obtained by reacting a neutral fluorene compound serving as a precursor with an alkali metal compound or an alkaline earth metal compound. The alkali metal compound includes alkyl alkali metals such a alkyl lithium etc. and other lithium salts, sodium salts or potassium salts, and the alkaline earth metal compound incudes dialkyl alkaline earth metals and magnesium salts and calcium salts such as magnesium chloride, magnesium bromide, etc.

The compound (4) in the reaction scheme 1 may be produced from a cyclopentadiene derivative and α,β-unsaturated ketone according to a known method (for example, J. Org. Chem., 1989, 54, 4981-4982) or may be produced by a method shown in the following reaction scheme 2:

[Scheme 2]

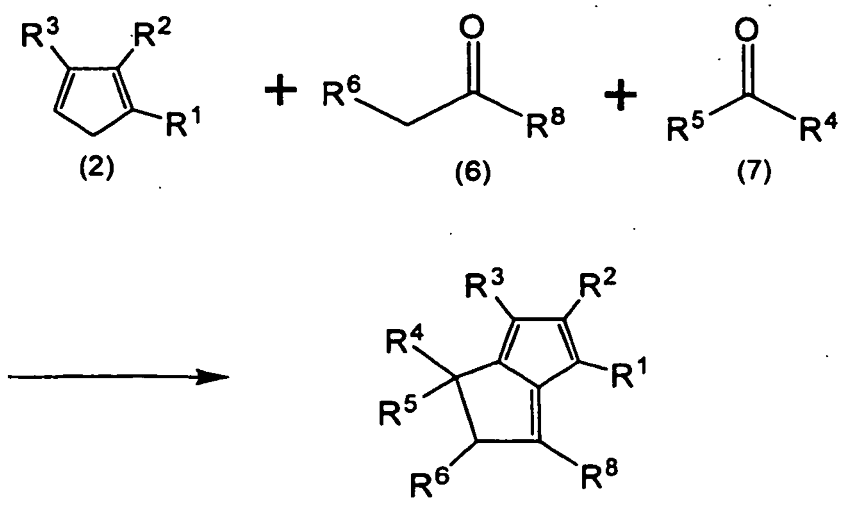

(4)

In the reaction scheme 2, $R^1$ to $R^6$ and $R^8$ have the same meaning as defined in the general formula [I]. In the reaction scheme 2, the reaction can be promoted more efficiently by adding a base. The base used may be a known base. Examples of the base include alkali metals such as sodium, potassium, lithium etc., alkali metal or alkaline earth metal salts such as potassium hydroxide, sodium hydroxide, potassium carbonate, sodium bicarbonate, barium hydroxide, sodium alkoxide, potassium alkoxide, magnesium hydroxide, magnesium alkoxide, potassium hydride, sodium hydride etc., nitrogen-containing bases such as diethyl amine, ammonia, pyrrolidine, piperidine, aniline, methyl aniline, triethyl amine, lithium diisopropyl amide, sodium amide etc., organic alkali metal compounds such as butyl lithium, methyl lithium, phenyl lithium etc., and Grignard reagents such as methyl magnesium chloride, methyl magnesium bromide, phenyl magnesium chloride, etc. For efficient progress of the above reaction, phase-transfer catalysts represented by, for example, crown ethers such as 18-crown-6-ether, 15-crown-5-ether etc., cryptants, quaternary ammonium salts such as tetrabutyl ammonium fluoride, methyl trioctyl ammonium chloride, tricapryl methyl ammonium chloride etc., phosphonium salts such as methyl triphenyl phosphonium bromide, tetrabutyl phosphonium bromide etc., and chain polyethers may be added.

One example of the method of producing the metallocene compound [m] represented by the general formula [I] in the present invention from the precursor compound represented by the general formula (1) is shown below, but the present invention is not limited to the following method. The precursor compound represented by the general formula (1), obtained by the reaction scheme 1, is contacted with an alkali metal, an alkali metal hydride, an alkali metal alkoxide, an organic alkali metal or an organic alkaline earth metal in an organic solvent in the range of -80°C to 200°C, thereby forming a dialkali metal salt. The organic solvent used in this contact step includes aliphatic hydrocarbons such as pentane, hexane, heptane, cyclohexane and decalin, aromatic hydrocarbons such as benzene, toluene and xylene, ethers such as tetrahydrofuran, diethyl ether, dioxane, 1,2-dimethoxyethane, tert-butyl methyl ether and cyclopentyl methyl ether, halogenated hydrocarbons such as dichloromethane and chloroform, or a mixed solvent of two or more thereof. The alkali metal used in the reaction includes lithium, sodium, potassiumetc. ; the alkali metal hydride includes sodiumhydride, potassium hydride etc. ; the alkalimetal alkoxide includes sodium methoxide, potassium ethoxide, sodium ethoxide and potassium tert-butoxide; the organic alkali metalincludesmethyl lithium, butyl lithium and phenyl lithium; the organic alkaline earth metal includes methyl magnesium halide, butyl magnesium halide, phenyl magnesium halide etc. ; and these may be used as a mixture of two or more thereof. Then, the di-alkali metal salt obtained above can be converted into a metallocene compound represented by the general formula [I] by reacting it in an organic solvent with a compound represented by the following general formula (8) :

$$MZ_k \qquad (8)$$

wherein M is a metal selected from the group IV in the periodic table, Z may be selected in the same or different combination from a halogen atom, an anion ligand, and a neutral ligand capable of coordination with a lone pair of electrons, and k is an integer of 3 to 6. Preferable examples of the compound represented by the general formula (8)

can include trivalent or tetravalent titanium fluoride, chloride, bromide and iodide, tetravalent zirconium fluoride, chloride, bromide and iodide, tetravalent hafnium fluoride, chloride, bromide and iodide, and complexes thereof with ethers such as tetrahydrofuran, diethyl ether, dioxane and 1,2-dimethoxyethane. The organic solvent used can include the same organic solvents as described above. In the above reaction, the dialkali metal salt is charged in an amount of 0.7 to 2.0 equivalents, preferably 0.8 to 1.5 equivalents, more preferably 0. 9 to 1. 2 equivalents, relative to the compound represented by the general formula (8), and the reaction temperature in the organic solvent is in the range of -80°C to 200°C, more preferably -75°C to 120°C. The resulting metallocene compound can be isolated and purified by methods such as extraction, recrystallization, sublimation etc. The metallocene compound of the present invention obtained by such method can be identified by analysis methods such as proton nuclear magnetic resonance spectrum, $^{13}C$ nuclear magnetic resonance spectrum, mass spectrometry and elemental analysis.

When the metallocene compounds [m] to [m''] in the present invention are used as a polymerization catalyst component, the catalyst component is composed of the metallocene compound [m] and at least one kind of compound [k] selected from an organoaluminum oxy compound [k-1], a compound [k-2] reacting with the metallocene compound [m] to form an ion pair, and an organoaluminum compound [k-3] (for simplification, [m], [m'] and [m"] are referred to collectively as [m]).

Hereinafter, the respective components are specifically described.

[k-1] Organoaluminum oxy compound

As the organoaluminum oxy compound [k-1] in the present invention, conventionally known aluminoxane can be used as it is. Specific examples include compounds represented by the general formula [II]:

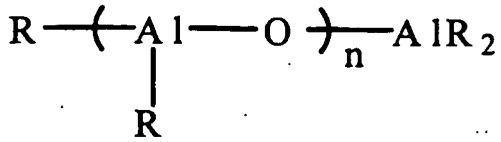

[II]

and/or the general formula [III]:

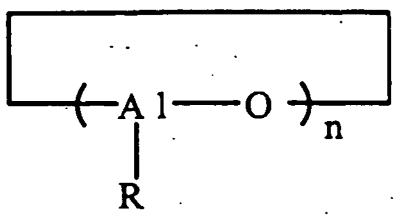

[III]

wherein R is a C1 to C10 hydrocarbon group, and n is an integer of 2 or more. Particularly, methyl aluminoxane wherein R is a methyl group and n is 3 or more, preferably 10 or more, is utilized. Certain amount of organoaluminum compound may be mixed in these aluminoxanes. A characteristic feature of the polymerization method of the present invention is that benzene-insoluble organoaluminum oxy compounds as illustrated in Japanese Patent Application Laid-Open No. 2-78687 can be used. Organoaluminum oxy compounds described in Japanese Patent Application Laid-Open No. 2-167305 and aluminoxane having two or more alkyl groups described in Japanese Patent Application Laid-Open No. 2-24701 and Japanese Patent Application Laid-Open No. 3-103407 can also be suitably used. The "benzene-insoluble" organoaluminum oxy compound used in the polymerization method of the present invention refers to a compound insoluble or sparingly soluble in benzene, wherein the A1 component thereof dissolved in benzene at 60°C is usually 10% or less, preferably 5% or less, particularly preferably 2% or less, in terms of A1 atom.

The Organoaluminum oxy compound used in the present invention can also include modified methyl aminosiloxane represented by the following [IV]:

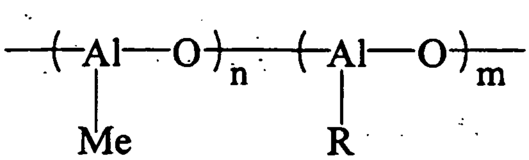

.... [IV]

wherein R represents a C1 to C10 hydrocarbon group, and m and n each represent an integer of 2 or more.

This modified methyl aluminoxane is prepared by using trimethyl aluminum and alkyl aluminum other than trimethyl aluminum. Such compound [IV] is generally called MMAO. MMAO can be prepared by methods mentioned by US4960878 and US5041584. The compound wherein R is an isobutyl group, prepared by using trimethyl aluminum and triisobutyl aluminum, is commercially produced under the name "MMAO" or "TMAO" by Tosoh Finechem Corporation etc. Such MMAO is conveniently used when the polymerization method of the present invention is carried out in the form of solution polymerization described below because this compound is an aluminoxane which has been improved in solubility in various solvents and in storage stability, and unlike the compounds [II] and [III] insoluble or sparingly soluble in benzene, is characterized by being dissolved in an aliphatic hydrocarbon and an alicyclic hydrocarbon.

The organoaluminumoxy compound used in the polymerization method of the present invention can also include boron-containing organoaluminum oxy compounds represented by the following general formula [V]:

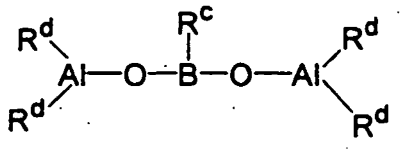

[V]

wherein $R^c$ represents a C1 to C10 hydrocarbon group; $R^d$s may be the same or different and each represent a hydrogen atom, a halogen atom or a C1 to C10 hydrocarbon group.

[k-2] Compound reacting with the crosslinked metallocene compound [m] to form an ion pair

The compound [k-2] which reacts with the metallocene compound [m] to form an ion pair (hereinafter referred to sometimes as "ionic compound") includes Lewis acid, ionic compounds, borane compounds and carborane compounds described in Japanese Patent Application National Publication (Laid-Open) Nos. 1-501950 and 1-502036, Japanese Patent Application Laid-Open No. 3-179005, Japanese Patent Application Laid-Open No. 3-179006, Japanese Patent ApplicationLaid-OpenNo. 3-207703, Japanese Patent Application Laid-Open No. 3-20-7704 and US5321106. Further, heteropoly compounds and isopoly compounds can also be mentioned.

The ionic compounds used preferably in the present invention are compounds represented by the following-general formula [VI]:

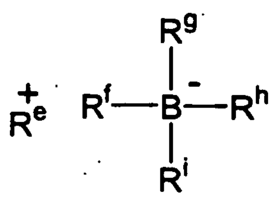

.... [VI]

wherein $R^{e+}$ includes $H^+$, a carbenium cation, an oxonium cation, an ammonium cation, a phosphonium cation, a cycloheptyltrienyl cation, and a ferrocenium cation having a transition metal, and $R^f$ to $R^i$ may be the same or different and each represent an organic group, preferably an aryl group.

Specific examples of the carbenium cation can include tri-substituted carbenium cations such as triphenylcarbenium cation, tris(methylphenyl)carbenium cation, tris(dimethylphenyl)carbenium cation, etc.

Specific examples of the ammonium cation include trialkylammonium cations such as trimethylammonium cation, triethylammonium cation, tri(n-propyl) ammonium cation, triisopropylammonium cation, tri(n-butyl)ammonium cation and triisobutylammonium cation, N, N-dialkylanilinium cations such as N,N-dimethylanilinium cation, N,N-diethylanilinium cation, and N,N-2,4,6-pentamethylaniliniumcation, and dialkylammonium cations such as diisopropylammonium cation and dicyclohexylammonium cation.

Examples of the phosphonium cation include triarylphosphonium cations such as triphenylphosphonium cation, tris(methylphenyl)phosphonium cation, and tris(dimethylphenyl)phosphonium cation.

$R^{e+}$ is preferably a carbenium cation, ammonium cation or the like, particularly preferably triphenylcarbenium cation, N,N-dimethylanilinium cation or N,N-diethylanilinium cation.

Specific examples of the carbenium salt can include triphenyl carbenium tetraphenyl borate, triphenyl carbenium tetrakis(pentafluorophenyl) borate, triphenyl carbenium tetrakis(3,5-difluoromethylphenyl) borate, tris(4-methylphenyl) carbenium tetrakis(pentafluorophenyl) borate, tris(3,5-dimethylphenyl) carbenium tetrakis(pentafluorophenyl) borate, etc.

The ammonium salt can include a trialkyl-substituted ammonium salt, N, N-dialkyl anilinium salt, dialkyl ammonium salt etc.

Specific examples of the trialkyl-substituted ammonium salt can include triethyl ammonium tetraphenyl borate, tripropyl ammonium tetraphenyl borate, tri(n-butyl) ammonium tetraphenyl borate, trimethyl ammonium tetrakis (p-tolyl) borate, trimethyl ammonium tetrakis(o-tolyl) borate, tri(n-butyl) ammonium tetrakis(pentafluorophenyl) borate, triethyl ammonium tetrakis(pentafluorophenyl) borate, tripropyl ammonium tetrakis(pentafluorophenyl) borate, tripropyl ammonium tetrakis(2,4-dimethylphenyl) borate, tri(n-butyl) ammonium tetrakis(3,5-dimethylphenyl) borate, tri(n-butyl) ammonium tetrakis(4-trifluoromethylphenyl) borate, tri(n-butyl) ammonium tetrakis(3,5-ditrifluoromethylphenyl) borate, tri(n-butyl) ammonium tetrakis(o-tolyl) borate, dioctadecyl methyl ammonium tetraphenyl borate, dioctadecyl methyl ammonium tetrakis(p-tolyl) borate, dioctadecyl methyl ammonium tetrakis(o-tolyl) borate, dioctadecyl methyl ammonium tetrakis (pentafluorophenyl) borate, dioctadecyl methyl ammonium tetrakis(2,4-dimethylphenyl) borate, dioctadecyl methyl ammonium tetrakis(3,5-dimethylphenyl) borate, dioctadecyl methyl ammonium tetrakis(4-trifluoromethylphenyl) borate, dioctadecyl methyl ammonium tetrakis(3,5-ditrifluoromethylphenyl) borate, dioctadecyl methyl ammonium, etc.

Specific examples of the N,N-dialkylanilinium salt can include N,N-dimethylanilinium tetraphenyl borate, N,N-dimethylanilinium tetrakis(pentafluorophenyl) borate, N,N-dimethylanilinium tetrakis(3,5-ditrifluoromethylphenyl) borate, N,N-diethylanilinium tetraphenyl borate, N,N-diethylanilinium tetrakis(pentafluorophenyl) borate, N,N-diethylanilinium tetrakis(3,5-ditrifluoromethylphenyl) borate, N,N-2,4,6-pentamethylanilinium tetraphenyl borate, N,N-2,4,6-pentamethylanilinium tetrakis (pentafluorophenyl) borate, etc.

Specific examples of the dialkylammonium salt can include (1-propyl) ammonium tetrakis (pentafluorophenyl) borate, dicyclohexylammonium tetraphenyl borate, etc.

In addition, ionic compounds disclosed by the present applicant (Japanese Patent Application Laid-Open No. 2004-51676) can also be used without limitation.

The ionic compounds (b-2) described above can be used as a mixture of two or more thereof.

[k-3] Organoaluminum compound

The organoaluminum compound [k-3] constituting the polymerization catalyst can include, for example, an organoaluminum compound represented by the general formula [VII] below and a complex alkylated compound consisting of the group I metal and aluminum, represented by the general formula [VIII] below.

$$R^a_mAl(OR^b)_nH_pX_q \qquad [VII]$$

wherein $R^a$ and $R^b$ may be the same or different and each represent a hydrocarbon group having 1 to 15 carbon atoms, preferably 1 to 4 carbon atoms, X represents a halogen atom, m is a number of $0 < m \leq 3$, n is a number of $0 \leq n < 3$, p is a number of $0 \leq p < 3$, q is a number of $0 \leq q < 3$, and $m + n + p + q = 3$.

Specific examples of such compounds include tri-n-alkylaluminum such as trimethylaluminum, triethylaluminum, tri-n-butylaluminum, trihexylaluminum and trioctylaluminum; tri-branched alkylaluminum such as triisopropylaluminum, triisobutylaluminum, tri-sec-butylaluminum, tri-tert-butylaluminum, tri-2-methylbutylaluminum, tri-3-methylhexylaluminum, and tri-2-ethylhexylaluminum; tricycloalkylaluminum such as tricyclohexylaluminum and tricyclooctylaluminum; triarylaluminum such as triphenylaluminum and tritolylaluminum; dialkylaluminum hydride such as diisopropylaluminum hydride and diisobutylaluminum hydride; alkenylaluminum such as isoprenylaluminum represented by the general formula $(i\text{-}C_4H_9)_xAl_y(C_5H_{10})_z$ (wherein x, y and z are positive number, and $z \leq 2x$); alkylaluminum alkoxide such as isobutylaluminum methoxide and isobutylaluminum ethoxide; dialkylaluminum alkoxide such as dimethylaluminum methoxide, diethylaluminum ethoxide and dibutylaluminum butoxide; alkylaluminum sesquialkoxide such as ethylaluminum sesquiethoxide and butylaluminum sesquibutoxide; partially alkoxylated alkylaluminum having an average composition represented by $R^a_{2.5}Al(OR^b)_{0.5}$ (wherein $R^a$ and $R^b$ have the same meanings as defined in the general formula [VII] above) or the like; alkylaluminum aryloxide such as diethylaluminumphenoxide and diethylaluminum (2,6-di-t-butyl-4-methylphenoxide); dialkylaluminum halide such as dimethylaluminum chloride, diethylaluminum chloride, dibutylaluminum chloride, diethylaluminum bromide, and diisobutylaluminum chloride; alkylaluminum sesquihalide such as ethylaluminum sesquichloride, butylaluminum sesquichloride, and ethylaluminum sesquibromide; partially halogenated alkylaluminum such as alkylaluminum dihalide such as ethylaluminum dichloride; dialkylaluminum hydride such as diethylaluminum hydride and dibutylaluminum hydride; other partially hydrogenated alkylaluminum such as alkylaluminum dihydride such as ethylaluminum dihydride and propylaluminum dihydride; and partially alkoxylated and halogenated alkylaluminum such as ethylaluminum ethoxychloride, butylaluminum butoxychloride,and ethylaluminum ethoxybromide.

$$M^aAlR^a_4 \qquad [VIII]$$

wherein $M^2$ represents Li, Na or K, and $R^a$ represents a hydrocarbon group having 1 to 15 carbon atoms, preferably 1

to 4 carbon atoms.

Examples of such compounds include LiAl $(C_2H_5)_4$, LiAl $(C_7H_{15})_4$ etc.

Alternatively, compounds similar to the compound represented by the general formula [VIII] may also be used, and examples thereof include organoaluminum compounds in which two or more aluminum compounds are bound to each other via a nitrogen atom. Specific examples of such compounds include $(C_2H_5)_2AlN(C_2H_5)Al(C_2H_5)_2$.

From the viewpoint of polymerization performance and availability, trimethyl aluminum, triethyl aluminum and triisobutyl aluminum are preferably used as the organoaluminum compound [k-3].

In the polymerization method of the present invention, the olefin polymerization catalyst described above may be used after being supported on particulate support[s]. Particularly in bulk polymerization using a supported catalyst used in the Examples shown later, the catalyst is utilized preferably in a form supported on the particulate catalyst support [s].

The catalyst support [s] is an inorganic or organic compound in the form of granular or microparticulate solid. The inorganic compound is preferably a porous oxide, inorganic halide, clay, clay mineral, or ion-exchangeable layered compound.

Specific examples of the porous oxide used include $SiO_2$, $Al_2O_3$, MgO, ZrO, $TiO_2$, $B_2O_3$, CaO, ZnO, BaO and $ThO_2$ or complexes or mixtures containing them, for example natural or synthetic zeolite, $SiO_2$-MgO $SiO_2$-$Al_2O_3$, $SiO_2$-$TiO_2$ $SiO_2$-$V_2O_5$, $SiO_2$-$Cr_2O_3$ and $SiO_2$-$TiO_2$-MgO. Among these, those based on $SiO_2$ and/or $Al_2O_3$ are preferable.

The above inorganic oxide may contain a small amount of carbonates, sulfates, nitrates and oxide components such as $Na_2CO_3$, $K_2CO_3$, $CaCO_3$, $MgCO_3$, $Na_2SO_4$, $Al_2$ $(SO_4)_3$, $BaSO_4$, $KNO_3$, $Mg(NO_3)_2$, $Al(NO_3)_3$, $Na_2O$, $K_2O$, $Li_2O$ etc.

As the inorganic halide, $MgCl_2$, $MgBr_2$, $MnCl_2$, $MnBr_2$ etc. are used. The inorganic halide may be used as it is or may be used after milling with a ball mill, a vibration mill or the like. Fine particles of the inorganic halide obtained by dissolving the inorganic halide in a solvent such as alcohol and then precipitating it with a precipitator can also be used.

The clay is composed usually of clay mineral as a major component. The ion-exchangeable layered compound is a compound having a crystal structure wherein faces constituted by ionic bonding etc. are layered in parallel by weak bonding force, and ions contained therein are exchangeable with one another. A majority ofclay minerals are ion-exchangeable layered compounds. These clays, clay minerals and ion-exchangeable layered compounds are not limited to natural products, and artificially synthesized products can also be used.

The clays, clay minerals or ion-exchangeable layered compounds can be exemplified by clays, clay minerals, and ionic crystalline compounds having a layered crystal structure of hexagonal close packing type, antimony type, $CdCl_2$ type or $CdI_2$ type.

Such clays and clay mineral include kaolin, bentonite, kibushi clay, gairome clay, allophane, hisingerite, pyrophyllite, mica group, montmorilonite group, vermiculite, chlorite group, palygorskite, kaolinite, nacrite, dickite, halochite etc., and the ion-exchangeable layered compounds include crystalline acidic salts of multivalent metals, such as $\alpha$-Zr $(HAsO_4)_2 \cdot H_2O$, $\alpha$-$Zr(HPO_4)_2$, $\alpha$-$Zr(KPO_4)_2 \cdot 3H_2O$, $\alpha$-$Ti(HPO_4)_2$, $\alpha$=$Ti(HAsO_4)_2 \cdot H_2O$, $\alpha$-$Sn(HPO_4)_2 \cdot H_2O$, $\gamma$-$Zr(HPO_4)_2$, $\gamma$-$Ti(HPO_4)_2$, $\gamma$-$Ti(NH_4PO_4)_2 \cdot H_2O$ etc. -

Such clays, clay minerals or ion-exchangeable layered compounds are those wherein the volume of voids having a radius of 20 Å or more is preferably at least 0.1 cc/g, more preferably 0.3 to 5 cc/g, as determined by porosimetry. The void volume is measured in the radius range of 20 to $3 \times 10^4$ Å by porosimetry using a mercury porosimeter.

When a material wherein the volume of voids having a radius of 20 Å or more is less than 0.1 cc/g is used as a catalyst support, high polymerization activity tends to be hardly obtained.

The clays and clay minerals are preferably subjected to chemical treatment.

As chemical treatment, any treatment such as surface treatment for removing impurities adhering to a surface and treatment for giving an influence to a crystal structure of clay can be used. Specifically, the chemical treatment includes acid treatment, alkali treatment, salt treatment, organic material treatment etc. The acid treatment brings about not only removal of impurities from a surface, but also an increase in surface area by eluting cations such as Al, Fe, Mg etc. in a crystal structure. The alkali treatment brings about a change in a clay structure by destroying a crystal structure of clay.

By the salt treatment or organic substance treatment, a surface area and a distance between layers can be changed by forming an ion complex, a molecular complex, an organic derivative etc.

The ion-exchangeable layered compound may be a layered compound in such a state that the distance between layers is increased by exchanging exchangeable ions between the layers with other larger bulky ions by utilizing its ion exchangeability.

Such bulky ions play a role as a pillar for supporting the layered structure, and is usually called a pillar. Such introduction of other substances into between layers in the layered compound is called intercalation. A guest compound subjected to intercalation includes cationic inorganic compounds such as $TiCl_4$ and $ZrCl_4$, metal alkoxides such as Ti $(OR)_4$, $Zr(OR)_4$, $PO(OR)_3$ and $B(OR)_3$ (wherein R is a hydrocarbon group or the like), and metal hydroxide ions such as $[Al_{13}O_4(OH)_{24}]^{7+}$, $[Zr_4(OH)_{14}]^{2+}$ and $[Fe_3O(OCOCH_3)_6]^+$. These compounds are used alone or as a mixture of two or more thereof. For intercalation of these compounds, polymeric products obtained by hydrolyzing metal alkoxides such

as $Si(OR)_4$, $Al(OR)_3$ and $Ge(OR)_4$ (wherein R is a hydrocarbon group or the like) or colloidal inorganic compounds such as $SiO_2$ can be coexistent. The pillar includes oxides formed by thermal dehydration after intercalation of the metal hydroxide ions into between layers.

The clays, clay minerals and ion-exchangeable layered compounds may be used as such, or may be used after treatment by a ball mill, sifting etc. These materials may be used after addition and adsorption of new water or after thermal dehydration treatment. These materials may be used alone or as a mixture of two or more thereof.

When ion-exchangeable layered silicate is used, not only the function thereof as a catalyst support but also its ion-exchanging property and layered structure can be utilized to reduce the amount of the used organic aluminum oxy compound such as alkyl aluminoxane. The ion-exchangeable layered silicate is produced mainly as a main component of clay mineral, but is not limited to natural products and may be artificial synthetic compounds. Specific examples of clays, clay minerals and ion-exchangeable layered silicates can include kaolinite, montmorillonite, hectorite, bentonite, smectite, vermiculite, taeniolite, synthetic mica, synthetic hectorite etc.

The organic compound includes granular or microparticulate solids having a particle diameter in the range of 5 to 300 $\mu$m. Specific examples include (co) polymers formed from C2 to C14 $\alpha$-olefins such as ethylene, propylene, 1-butene and 4-methyl-1-pentene as major components, (co)polymers formed from vinyl cyclohexane and styrene as major components, and polymers or modified products thereof having polar functional group obtained by copolymerizing or graft-polymerizing polar monomers such as acrylic acid, acrylates, maleic anhydrides etc. with the copolymer or above polymers. These particulate supports can be used alone or as a mixture of two or more thereof.

If necessary, the olefin polymerization catalyst can also contain a specific organic compound component [q]. In the present invention, the organic compound component [q] is used as necessary for the purpose of improving polymerization performance and physical properties of the polymer formed. Such organic compounds include alcohols, phenolic compounds, carboxylic acid, phosphorous compounds and sulfonates.

In polymerization, the usage and addition order of the components [m], [k] and [s] constituting the polymerization catalyst are arbitrarily selected and can be exemplified by the following method. (The following exemplary method involves feeding the catalyst components into a single polymerizer. A method of feeding the catalyst components into two or more polymerizers arranged in series, such as a method used in a direct polymerization method, is in accordance with a method of feeding into a single polymerizer.)

(1) Method of adding the component [m] alone to a polymerizer
(2) Method of adding the components [m] and [k] in an arbitrary order to a polymerizer
(3) Method of adding a catalyst component comprising the component [m] supported by support [s], and the component [k], in an arbitrary order to a polymerizer
(4) Method of adding a catalyst component comprising the component [k] supported by support [s], and the component [m], in an arbitrary order to a polymerizer
(5) Method of adding a catalyst component comprising the components [m] and [k] supported by support [s] to a polymerizer

In each of the methods (2) to (5), at least two of the catalyst components may be previously contacted with each other. In the methods (4) and (5) using the supported component [k], unsupported components [k] may be added if necessary in an arbitrary order. In this case, the components [k] may be the same or different. Olefins may be previously polymerized in the solid catalyst component having the component [m] supported by the component [s] or the solid catalyst component having the components [m] and [k] supported by the component [s]. The olefins used in preliminary polymerization can be arbitrarily in the form of a single C2 to C6 olefin or a mixture of C2 to C6 olefins, and usually ethylene is preferably used. The amount of the olefins preliminarily polymerized varies depending on the olefin species, but is usually 0.01 to 100 g, preferably 0.05 to 50 g, per g of the solid catalyst component. A catalyst component may be further carried on the preliminarily polymerized solid catalyst component. (In the following description, "preliminary polymerization" is referred to as "pre-polymerization", and "preliminarily polymerized solid catalyst component" is referred to sometimes as "pre-polymerization catalyst".)

In the present invention, propylene (MP) and at least one kind of olefin (MX) selected from ethylene and C4 or more $\alpha$-olefins are polymerized or copolymerized thereby giving the propylene polymer [A].

The polymerization can be carried out by liquid-phase polymerization such as solution polymerization or suspension polymerization or by gaseous-phase polymerization. Examples of inert hydrocarbon solvents used in liquid-phase polymerization include aliphatic hydrocarbons such as propane, butane, pentane, hexane, heptane, octane, decane, dodecane and kerosene; alicyclic hydrocarbons such as cyclopentane, cyclohexane and methylcyclopentane; aromatic hydrocarbons such as benzene, toluene and xylene; halogenated hydrocarbons such as ethylene dichloride, chlorobenzene and dichloromethane, or mixtures thereof. Bulk polymerization using liquefied olefin itself as solvent can also be used.

When the polymerization catalyst described above is used in polymerization, the component (A) is used usually

in an amount of $10^{-9}$ to $10^{-2}$ mole, preferably $10^{-8}$ to $10^{-3}$ mole, per L of the reaction volume. The component [k-1] is used in such an amount that the molar ratio of the component [k-1] to the total transition metal atom (M) in the component [m] ([k-1]/M) is usually 0.01 to 5,000, preferably 0.05 to 2,000. The component [k-2] is used in such an amount that the molar ratio of the aluminum atom in the component [k-2] to the total transition metal (M) in the component [m] ([k-2]/M) is usually 10 to 5,000, preferably 20 to 2,000. The component [k-3] is used in such an amount that the molar ratio of the component [k-3] to the transition metal atom (M) in the component [m] ([k-3]/M) is usually 1 to 3,000, preferably 1 to 500. The component [q] is used in such an amount that when the component [k] is the component [k-1], the molar ratio ([q]/[k-1]) is usually 0.01 to 10, preferably 0.1 to 5; when the component [k] is the component [k-2], the molar ratio ([q]/[k-2]) is usually 0.01 to 2, preferably 0.005 to 1; and when the component [k] is the component [k-3], the molar ratio ([q]/[k-3]) is usually 0.01 to 10, preferably 0.1 to 5.

The polymerization temperature with the polymerization catalyst is usually in the range of -50°C to +200°C, preferably 0 to 170°C. The polymerization pressure is usually normal pressures to 10 MPa gauge pressure, preferably normal pressures to 5 MPa gauge pressure, and the polymerization reaction can be carried out by any methods in a batch, semi-continuous or continuous system. The polymerization reaction can be carried out in two or more stages different in reaction conditions. In the "direct polymerization method" described above, a multistage polymerization method wherein polymerizers different in reaction conditions are connected in series is preferably adopted. The molecular weight of the obtained propylene polymer can be regulated by allowing hydrogen molecules to be present in the polymerization system or by changing the polymerization temperature. Further, the molecular weight can be regulated by changing the amount of the component [k] used. When hydrogen molecules are added, the amount thereof is appropriately about 0.001 to 100 NL per kg of the formed propylene polymer.

The propylene polymer [A] is composed of a skeleton derived from propylene (MP) as an essential skeleton and a skeleton derived from at least one kind of olefin (MX) selected from ethylene and C4 or more α-olefins. Among the C4 or more α-olefins, "preferable α-olefins" are as previously illustrated, but when the propylene polymer [A] is used in a field where the adhesion thereof to metal or polar resin is required, in a field where high-dimensional transparency is required, or in a field where carbon-carbon double bonds are desired to remain in a polymer molecule, it is possible to mention, in addition to the previously described "preferable α-olefins" as the olefin source, C3 to C30, preferably C3 to C20, cyclic olefins, for example cyclopentene, cycloheptene, norbornene, 5-methyl-2-norbornene, tetracyclododecene, 2-methyl-1,4,5,8-dimethano-1,2,3,4,4a,5,8,8a-octahydronapht halene; polar monomers, for example α,β-unsaturated carboxylic acids such as acrylic acid, methacrylic acid, fumaric acid, maleic anhydride, itaconic acid, itaconic anhydride, bicyclo(2,2,1)-5-heptene-2,3-dicarboxylic anhydride, and metal salts thereof such as sodium salt, potassium salt, lithium salt, zinc salt, magnesium salt, calcium salt, aluminum salt etc.; α,β-unsaturated carboxylates such as methyl acrylate, ethyl acrylate, n-propyl acrylate, isopropyl acrylate, n-butyl acrylate, isobutyl acrylate, tert-butyl acrylate, 2-ethylhexyl acrylate, methyl methacrylate, ethyl methacrylate, n-propyl methacrylate, isopropyl methacrylate, n-butyl methacrylate, isobutyl methacrylate etc. ; vinyl esters such as vinyl acetate, vinyl propionate, vinyl caproate, vinyl caprinate, vinyl laurate, vinyl stearate, vinyl trifluoroacetate etc.; and unsaturated glycidyl such as glycidyl acrylate, glycidyl methacrylate, monoglycidyl itaconate etc. Further, the polymerization can also proceed in the reaction system in the coexistence of aromatic vinyl compounds such as vinyl cyclohexane, diene or polyene, for example styrene and mono- or polyalkyl styrene such as styrene, o-methyl styrene, m-methyl styrene, p-methyl styrene, o,p-dimethyl styrene, o-ethyl styrene, m-ethyl styrene, p-ethyl styrene etc.; functional group-containing styrene derivatives such as methoxy styrene, ethoxy styrene, vinylbenzoic acid, methyl vinylbenzoate, vinylbenzyl acetate, hydroxy styrene o-chlorostyrene, p-chlorostyrene, divinyl benzene etc.; 3-phenylpropylene, 4-phenylpropylene, α-methyl styrene etc.; α,ω-nonconjugated dienes such as 1, 4-pentadiene, 1,5-hexadiene, 1,4-hexadiene, 1,4-octadiene, 1,5-octadiene, 1,6-octadiene, 1,7-octadiene, 1,9-decadiene etc.; nonconjugated dienes such as ethylidene norbornene, vinyl norbornene, dicyclopentadiene, 7-methyl-1,6-octadiene, 4-ethylidene-8-methyl-1,7-nonadiene etc.; conjugated dienes such as butadiene, isoprene etc.; nonconjugated trienes such as 6, 10-dimethyl-1, 5, 9-undecatriene, 4,8-dimethyl-1,4,8-decatriene, 5,9-dimethyl-1,4,8-decatriene, 6,9-dimethyl-1,5,8-decatriene, 6,8,9-trimethyl-1,5,8-decatriene, 6-ethyl-10-methyl-1,5,9-undecatriene, 4-ethylidene-1,6-octadiene, 7-methyl-4-ethylidene-1,6-octadiene, 4-ethylidene-8-methyl-1,7-nonadiene (EMND), 7-methyl-4-ethylidene-1,6-nonadiene, 7-ethyl-4-ethylidene-1,6-nonadiene, 6,7-dimethyl-4-ethylidene-1,6-octadiene, 6,7-dimethyl-4-ethylidene-1,6-nonadiene, 4-ethylidene-1,6-decadiene, 7-methyl-4-ethylidene-1,6-decadiene, 7-methyl-6-propyl-4-ethylidene-1,6-octadiene, 4-ethylidene-1,7-nonadiene, 8-methyl-4-ethylidene-1,7-nonadiene and 4-ethylidene-1,7-undecadiene; and conjugated trienes such as 1,3,5-hexatriene (the above olefins which, depending on applications, are used in combination with propylene and "preferable α-olefins" are referred to sometimes as "arbitrary olefins).

When the arbitrary olefins are also used in the polymerization reaction, the used amount thereof is usually within the range of 0.001 to 20 mol%, preferably 0.001 to 10 mol%, based on the total olefins fed.

The propylene polymer (A), when viewed from the substance, is composed of n-decane insoluble part ($D_{insol}$) and n-decane soluble part ($D_{sol}$), and when viewed from the production method, is composed of a (co) polymer (=polymer [a1]) corresponding substantially to n-decane insoluble part ($D_{insol}$) and a copolymer (=polymer [a2]) corresponding substantially to n-decane soluble part ($D_{sol}$), as described above. Hereinafter, the methods of producing these respective

components are described in detail by reference to the process of producing them.

In the methods A and B, the olefin used in production of the polymer [a1] is propylene (MP) and if necessary at least one kind of olefin (MX) selected from ethylene and the C4 or more α-olefins. When at least one kind of olefin (MX) selected from ethylene and the C4 or more α-olefins is used in addition to propylene, the amount of MX used in polymerization reaction is 0.0003 to 0.04 mole, preferably 0.0003 to 0.02 mole, more preferably 0.0003 to 0.012 mole, per mole of propylene (MP). A preferable aspect of the olefin source is propylene (MP) and if necessary at least one kind of olefin selected from ethylene and the C4 or more α-olefins, more preferably propylene (MP) and if necessary ethylene. A particularly preferable aspect in the intended use of the invention is propylene (MP) alone. By the method described above, the polymer [a2] wherein room-temperature n-decane soluble part ($D_{sol}$) is 0. 5 wt% or less, preferably 0.4 wt% or less, can be obtained.

In the methods A and B, the olefin used in production of the polymer [a2] is propylene (MP) and at least one kind of olefin (MX) selected from ethylene and C4 or more α-olefins. The amount of MX used in the polymerization reaction is 0.12 to 9.0 moles, preferably 0.20 to 7.5 moles, more preferably 0.28 to 6. 0 moles, per mole of propylene (MP) used. A preferable aspect of the olefin source is propylene (MP) and ethylene. By the method described above, the polymer [a2] wherein room-temperature n-decane insoluble part ($D_{insol}$) is 5.0 wt% or less, preferably 4.0 wt% or less, can be obtained.

In the method B, the polymers [a1] and [a2] are polymerized separately in the same polymerizer or different polymerizers, if necessary followed by known post-treatment steps such as a catalyst inactivation treatment step, a catalyst residue eliminating step and a drying step, and the resulting two polymers are blended by a physical means. The blending ratio of the respective polymers to be blended, in terms of (weight of [a1])/(weigh of [a2]), is usually 60/40 to 90/10, preferably 70/30 to 90/10. The physical blend comprises a combination of different kinds of polymers, which is attributable to specific interaction of the polymers. The physical blending method can include, for example, a melt blending method. The melt blending method is a method wherein the polymers are kneaded mechanically while they are plasticized by heating with a mixing roll, a Banbury mixer, a single- or twin-screw extruder or the like. The melting conditions for blending in the method B in the present invention are not particularly limited insofar as the two polymers [a1] and [a2] are made sufficiently compatible with each other to such an extent that the performance is not inhibited in applications intended by the present invention, and for example, a method of melt-kneading at 180 to 250°C in a twin-screw extruder can be mentioned.

The amounts of the polymers produced in the steps 1 and 2 in the method A are described in the following example. In this example, the propylene polymer is produced by continuously conducting the two steps, that is, (1) a step of producing a propylene homopolymer (= step 1) and a step of producing a propylene/α-olefin copolymer(=step2). The following example is 3-stage polymerization wherein the first step is carried out in 2 stages and the second step is carried out in 1 stage. That is, it is preferable that the propylene homopolymer is produced in the first stage at a polymerization temperature of 0 to 100°C at a polymerization pressure of normal pressure to 5 MPa gauge pressure and then produced in the second stage at a polymerization temperature of 0 to 100°C at a polymerization pressure of normal pressure to 5 MPa gauge pressure such that the content thereof in the resulting polypropylene resin becomes 90 to 60 wt% in total of the first and second stages, and the propylene/α-olefin copolymer is produced in the third stage at a polymerization temperature of 0 to 100°C at a polymerization pressure of normal pressure to 5 MPa gauge pressure such that the content of the finally obtained propylene polymer becomes 10 to 40 wt%. As illustrated in the above example, the step 1 or 2 in the method B in the present invention may be composed of two or more polymerization stages. After the polymerization is finished, the propylene polymer is obtained as powder by carrying out known post-treatment steps such as a catalyst inactivation treatment step, a catalyst residue eliminating step and a drying step. The propylene polymer produced as described above is blended if necessary with various additives such as an antioxidant, an UV absorber, an antistatic agent, a nucleating agent, a lubricant, a flame-retardant, an anti-blocking agent, a colorant, inorganic or organic fillers, and various kinds of synthetic resin, then melt-kneaded and pelletized into pellets to be subjected to production of films, sheets or retort pouches.

Use of Propylene Copolymer (A)

The propylene polymer (A) satisfies the requirements [1] to [5] and [1'] to [4'] described above. The propylene polymer (A) is applied for use in film, particularly for use as a material for film or sheet constituting a retort pouch. Here, the performance of the propylene polymer (A) can be exhibited sufficiently. Specifically, as the propylene polymer (A) is formed into a film by a molding method such as casting molding, the film shows excellent properties such as 1) excellent transparency, 2) high Young's modulus at high temperatures (for example at 60°C), 3) excellent impact at low temperatures (for example at -10°C), and 4) high heat-sealing strength. The film showing such properties are useful as a sealant of a laminate film for high retort and can be expected to contribute to considerable development of retort pouch industry in the future.

Effect of the Invention

The propylene polymer (A) is a polymer consisting of n-decane insoluble part ($D_{insol}$) having a high melting point, that is, a propylene homopolymer part, and n-decane soluble part ($D_{sol}$) having high intrinsic viscosity [η], that is, a copolymer part consisting essentially of a propylene-derived skeleton, and which satisfies the above requirements [1] to [5], and thus when molded into a film or sheet, shows performance not present in the conventional material in respect of (1) heat resistance, (2) transparency, (3) impact strength, (4) elastic modulus (Young's modulus, flexural modulus), and (5) adhesion. Specifically, the propylene polymer (A) maintains the same performance as achieved by the conventional material in respect of the specified items among (1) to (5) and further exhibits significant improvements in other specific items. As a matter of course, the various molded products described above generally have required performance inherent in the type of the molded products. Under such condition, an invention of a material improving only specific performance at the sacrifice of a certain performance (that is, at the cost of a certain performance, thus resulting in deterioration in the performance) cannot be said to contribute to industrial development, and an invention attempting at partial improvement of specific performance while maintaining the whole performance, such as the present invention, can contribute truly to industrial development.

Hereinafter, the present invention is described specifically by reference to the Examples, but the present invention is not limited by such examples. The analysis methods used in the present invention are as follows:

[m1] Amount of room-temperature n-decane soluble part ($D_{sol}$)

5 g of the final product (that is, the propylene polymer of the present invention) was added to 200 ml n-decane and then dissolved by heating at 145°C for 30 minutes. This sample was cooled over about 3 hours to 20°C and left for 30 minutes. Thereafter, a precipitate (referred to hereinafter as n-decane insoluble part ($D_{insol}$)) was separated by filtration. The filtrate was introduced into acetone in an amount about 3 times that of the filtrate, whereby the component dissolved in n-decane was precipitated. Precipitate (A) was separated by filtration from the acetone and then dried. When the filtrate was concentrated into dryness, no residues were recognized. The amount of n-decane soluble part was determined according to the following equation:

$$\text{Amount of n-decane soluble part (wt\%)} = [\text{weight of precipitate (A)/weight of the sample}] \times 100$$

[m2] Measurement of Mw/Mn [weight-average molecular weight (Mw)/number-average molecular weight (Mn)]

Using GPC-150C Plus manufactured by Waters Corporation, Mw/Mn was determined in the following manner. As columns for separation, TSK gel GMH6-HT and TSK gel GMH6-HTL were used, and their column sizes were 7.5 mm in inner diameter and 600 mm in length respectively, and the column temperature was 140°C, and o-dichlorobenzene (Wako Pure Chemical Industries, Ltd.) was used as the mobile phase and transferred at 1.0 ml/min. with 0.025 wt% BHT (Wako Pure Chemical Industries, Ltd.) as an antioxidant. The concentration of a sample was 0.1 wt%, and the volume of the sample injected was 500 μL, and a differential refractometer was used as the detector. Standard polystyrene having a molecular weight of Mw < 1,000 and Mw > $4\times0^6$ was a product of Tosoh Corporation, and standard polystyrene having a molecular weight of 1,000 ≤ Mw ≤ $4\times10^6$ was a product of Pressure Chemical Company, to determine PP-equivalent molecular weight by an universal calibration method. The Mark-Houwink coefficients of PS and PP used were values described in a literature (J. Polym. Sci., PartA-2, 8, 1803 (1970), Makromol. Chem., 177, 213 (1976).

[m3] Melting point (Tm)

Melting point was measured by using a differential scanning calorimeter (DSC, manufactured by PerkinElmer, Inc.). An endothermic peak in the third step was defined as melting point (Tm).

(Measurement conditions)

First step: Temperature rising at 10°C/min to 240°C and keeping 240°C for 10 minutes.
Second step: Temperature falling at 10°C/min to 60°C.
Third step: Temperature rising at 10°C/min to 240°C.

[m4] Measurement of 2,1-bond content and 1,3-bond content

A sample, 20 to 30 mg, was dissolved in 0. 6 ml mixed solvent of 1,2,4-trichlorobenzene/deutrated benzene (2 : 1) and then subjected to carbon nuclear magnetic resonance analysis ($^{13}$C-NMR). The following partial structures containing positionally irregular units based on 2,1-insertion and 1,3-insertion are represented by the following (i) and (ii):

Structure (i)

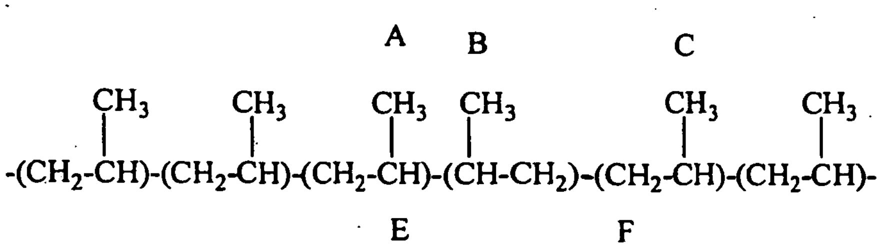

and,

Structure (ii)

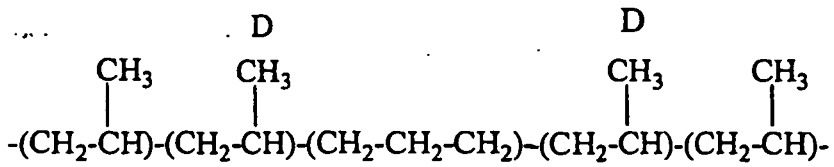

The monomer formed by 2,1-insertion forms a positionally irregular unit represented by the above partial structure (i) in a polymer chain. The frequency of insertion of 2,1-propylene monomer, based on insertion of every propylene, was calculated according to the following equation.

Proportion (%) of positionally irregular unit based on 2,1-insertion = {0.5 × [area of methyl group (16.5 - 17.5 ppm)]/[$\Sigma ICH_3$ + ($I\alpha\delta$ + $I\beta\gamma$)/4]} × 100

In this equation, $\Sigma ICH_3$ represents the area of every methyl group. $I\alpha\delta$ and $I\beta\gamma$ each represent the area of $\alpha\delta$ peak (resonating in the vicinity of 37.1 ppm) and the area of $\beta\gamma$ peak (resonating in the vicinity of 27. 3 ppm), respectively. Designation of these methylene peaks were in accordance with a method of Carman et al. (Rubber Chem. Technol., 44 (1971), 781).

Similarly, the frequency of insertion of 1,3-propylene monomer represented by the partial structure (ii), based on insertion of every propylene, was calculated according to the following equation:

$$\text{Proportion (\%) of positionally irregular unit based on 1,3-insertion} = [(I\alpha\delta + I\beta\gamma)/4]/[\Sigma ICH_3 + (I\alpha\delta + I\beta\gamma)/4] \times 100$$

[m5] Intrinsic viscosity [η]

Intrinsic viscosity was measured at 135°C in a decalin solvent. About 20 g sample was dissolved in 15 ml decalin and measured for its specific viscosity $\eta_{sp}$ in an oil bath at 135°C. This decalin solution was diluted with additional 5 ml decalin solvent and then measured for its specific viscosity $\eta_{sp}$ in the same manner as above. This diluting procedure was repeated further twice, and the value of $\eta_{sp}/C$ upon extrapolation of concentration (C) to 0 was determined as the intrinsic viscosity.

$$[\eta] = \lim(\eta_{sp}/C) \quad (C \to 0)$$

[m6] Content of ethylene-derived skeleton

For measurement of the concentration of ethylene-derived skeletons in $D_{insol}$ and $D_{sol}$, 20 to 30 mg sample was dissolved in 0.6 ml mixed solvent of 1,2,4-trichlorobenzene/deutrated benzene (2 : 1) and then subjected to carbon nuclear magnetic resonance analysis ($^{13}$C-NMR). Propylene, ethylene and α-olefin were quantified by diad chain distribution. For example, in the case of propylene-ethylene copolymer, PP = $S_{\alpha\alpha}$, EP = $S_{\alpha\gamma} + S_{\alpha\beta}$, and EE = $1/2(S_{\beta\delta} + S_{\delta\delta}) + 1/4S_{\gamma\delta}$ were used to determine the content of ethylene-derived skeletons by the following equations (Eq-1) and (Eq-2):

$$\text{Propylene (mol\%)} = (PP + 1/2EP) \times 100/[(PP + 1/2EP) + (1/2EP + EE)$$

$$\text{Ethylene (mol\%)} = (1/2EP + EE) \times 100/[(PP + 1/2EP) + (1/2EP + EE)$$

In the Examples, the amount of ethylene and α-olefin in $D_{insol}$ was shown in terms of wt%.

[m7] MFR (melt flow rate)

MFR was measured according to ASTM D1238 (230°C, loading 2.16 kg).

[m8] Tensile test of injection-molded product (breaking elongation)

The tensile test was carried out according to ASTM D638.

<Measurement conditions>

Test specimen: Dumbbell ASTM-1, 19 mm (width) × 3.2 mm (thickness) × 165 mm (length)
Stress rate: 50 mm/min
Span distance: 115 mm

[m9] Flexural modulus of injection-molded product

Flexural modulus (FM) was measured under the following conditions according to ASTM D790.

<Measurement conditions>

Test specimen: 12.7 mm (width)×6.4 mm (thickness)×127 mm (length)
Stress rate: 2.8 mm/min
Bend span: 100 mm

[m10] Izod impact strength (IZ) of injection-molded product

Izod impact strength (IZ) was measured under the following conditions according to ASTM D256.

<Measurement conditions>

Temperature: 23°C, -30°C
Test specimen: 12.7 mm (width)×6.4 mm (thickness)×64 mm (length)

A notch was machined.

(m11] Rockwell hardness of injection-molded product

Rockwell hardness was measured under the following conditions according to ASTM D2240.

<Measurement conditions>

Test specimen: Dumbbell ASTM-1
19 mm (width)x3.2 mm (thickness)×165 mm (length)
Measurement site: Dumbbell gate side

[m12] Brittle temperature of injection-molded product at low temperatures

Brittle temperature at low temperatures was measured according to ASTM D746.

[m13] Young's modulus of film

The Young' s modulus of film was measured according to JIS K6781.

<Measurement conditions>

Temperature: 23°C, 60°C
Stress rate: 200 mm/min.
Distance between chucks: 80 mm

[m14] Impact test of film

A film 5 cm×5 cm was used as a sample and measured for its surface impact strength at a predetermined temperature with an impact tester (in a system of pushing up a hammer).

<Measurement conditions>

Temperature: 0°C, -10°C
Hammer: top 1 inch, loading 3.0 J

[m15] Haze of film

Measured according to ASTM D-1003.

[m16] Heat sealing properties of film (minimum heat sealing temperature)

A film of 5 mm in width was used as a sample and sealed for a sealing time of 1 second at a pressure of 0.2 MPa. Both the ends of the sealed film were drawn at 300 mm/min. to determine the maximum peel strength. An upper part of a seal bar was set at a specified temperature of 170°C, and a lower part was set at 70°C.

[m17] Cross-chromatographic fractionation measurement (CFC)

The analysis of component soluble in o-dichlorobenzene at each temperature was carried out by cross-chromatographic fractionation measurement (CFC). In CFC, an apparatus shown below, equipped with a temperature rising elution fractionation (TREF) part wherein compositional fractionation is carried out and a GPC part wherein molecular-weight fractionation is carried out, was used in measurement under the following conditions to determine the amount of the component soluble at each temperature.

Measurement apparatus: CFC T-150A, manufactured by Mitsubishi Petrochemical Co., Ltd.

Columns: Shodex AT-806MS (3 columns)
Eluent: o-Dichlorobenzene
Flow rate: 1.0 ml/min
Sample concentration: 0.3 wt%/vol% (containing 0.1% BHT)
Injection volume: 0.5 ml
Solubility: Completely dissolved
Detector: Infrared absorption detection method, 3.42 μ (2924 $cm^{-1}$), NaCl plate
Elution temperature: 0 to 135°C, 28 fractions
0, 10, 20, 30, 40, 45, 50, 55, 60, 65, 70, 75, 80, 85, 90, 94, 97, 100, 103, 106, 109, 112, 115, 118, 121, 124, 127, 135 (°C)

The measurement was specifically carried out as follows: The sample was dissolved by heating at 145°C for 2 hours, then kept at 135°C, cooled to 0°C at 10°C/hr, and kept at 0°C for 60 minutes, to coat the sample. The capacity of the temperature rising elution column was 0.83 ml, and the capacity of the pipe was 0.07 ml. The detector was an infrared spectrograph MIRAN 1A CVF ($CaF_2$ cell) manufactured by FOXBORO, and infrared light at 3.42 μm (2924 $cm^{-1}$) was.detected in an absorbance mode for a response time of 10 seconds. The sample was fractionated into 25 to 40 fractions at elution temperatures of 0°C to 135°C. The temperature is indicated in integer, and for example, an elution fraction at 94°C refers to a component eluted at a temperature between 91 and 94°C. A component not coated even at 0°C and fractions eluted at the respective temperatures were measured for their molecular weight, and polypropylene-equivalent molecular weights were determined by using a universal calibration curve. The SEC temperature is 135°C, the internal standard injection volume is 0.5 ml, the injection position is 3. 0 ml, and the data sampling time is 0.50 second. Data sampling was carried out with an analysis program "CFC Data Processing (Version 1.50)" attached to the apparatus.

Details of the Examples are shown below. Small-letter alphabet "a" indicated after Example (and Comparative Example) Number means that the Example (and Comparative Example) are related to the propylene based resin composition, and alphabet "d" means that the Example (and Comparative Example) are related to the film of the present invention.

[Example 1a]

(1) Production of solid catalyst support

300 g $SiO_2$ (manufactured by Dokai Kagakusha) was introduced into a 1-L side-arm flask and then 800 ml

toluene was added to form slurry. Then, the slurry was transferred to a 5-L four-neck flask, and 260 ml toluene was added. 2,830 ml solution of methyl aluminoxane (hereinafter abbreviated as MAO) in toluene (10 wt% solution manufactured by Albemarle Corporation) was introduced. The mixture was stirred at room temperature for 30 minutes. The mixture was heated over 1 hour to 110°C and reacted for 4 hours. After the reaction was finished, the mixture was cooled to room temperature. After cooling, the supernatant toluene was removed and substituted with fresh toluene until the degree of substitution became 95%. (The term "degree of substitution" in the present invention refers to the degree of substitution of solvent; for example, when 9 L toluene is removed from 10 L toluene and 9 L heptane is added thereto to give 10 L, "the degree of substitution thereof" is defined as 90%.)

(2) Production of solid catalyst (supporting of the metal catalyst component on a catalyst support)

2.0 g of [3-(1',1',4',4',7',7',10',10'-octamethyloctahydrodibenzo [b,h] fluorenyl) (1,1,3-trimethyl-5-tert-butyl-1,2,3,3a-tetrahydropentalene) ] zirconium dichloride was weighed out in a 5-L four-neck flask in a glove box. The flask was put outside, and 0.46 L toluene and 1.4 L of the $MAO/SiO_2$/toluene slurry prepared in the above (1) were added thereto under nitrogen and stirred for 30 minutes for supporting. 99% of the toluene in the resulting [3-(1',1',4',4',7',7',10',10'-octamethyloctahydrodibenzo [b,h] fluorenyl) (1,1,3-trimethyl-5-tert-butyl-1,2,3,3a-tetrahydropentalene) ] zirconium dichloride/$MAO/SiO_2$/toluene slurry was substituted with n-heptane to give slurry in a final volume of 4.5 L. This operation was carried out at room temperature.

(3) Production of pre-polymerization catalyst

202 g of the solid catalyst component prepared in the above (2), 103 ml triethyl aluminum and 100 L heptane were introduced into an autoclave with an inner volume of 200 L equipped with a stirrer, and while the internal temperature was kept at a temperature of 15 to 20°C, 2020 g ethylene was introduced and the mixture was reacted for 180 minutes under stirring. After the polymerization was finished, solid components were precipitated, and removal of the supernatant and washing with heptane were carried out twice. The resulting pre-polymerization catalyst was suspended again in refined heptane such that the concentration of the solid catalyst component became 2 g/L. This pre-polymerization catalyst contained 10 g polyethylene per g of the solid catalyst component.

(4) Main polymerization

40 kg/hour propylene, 5 NL/hour hydrogen, 1.0 g/hour catalyst slurry produced in the above (3) as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1,000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 54°C at a polymerization pressure of 2.9 MPa/G with 10 kg/hour propylene and with ethylene and hydrogen such that the concentration of hydrogen in the gaseous phase became 0.06 mol%.

The resulting slurry was gasified and then subjected to gas-solid separation to give a propylene polymer (I-a). The property values thereof after vacuum drying at 80°C are shown in Table 1. The weight-average molecular weight (Mw) of the propylene polymer (I-a) soluble in o-dichlorobenzene at 0°C was $2.9\times10^5$, the ratio (Mw/Mn) of the weight-average molecular weight (Mw) to the number-average molecular weight (Mn) was 2.3, the ratio (Mw/Mn) oftheweight-averagemolecularweight (Mw) thereof insoluble in o-dichlorobenzene at 90°C and soluble in o-dichlorobenzene at 135°C to the number-average molecular weight (Mn) thereof was 2.2, and the content of the ethylene-derived skeleton of the propylene polymer (I-a) in $D_{insol}$ was 1.0 mol%.

[Example 2a]

A polymer was obtained in the same manner as in Example 1a except that the polymerization method was changed as follows:

(1) Main polymerization

40 kg/hour propylene, 5 NL/hour hydrogen, 1.0 g/hour catalyst slurryproduced in (3) in Example 1a as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1,000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 51°C at a polymerization pressure of 2.9 MPa/G with 10 kg/hour propylene and with ethylene and hydrogen such that the concentration of hydrogen in the gaseous phase became 0. 07 mol%.

The resulting slurry was gasified and then subjected to gas-solid separation to give a propylene polymer (I-b). The property values thereof after vacuum drying at 80°C are shown in Table 1.

[Example 3a]

A polymer was obtained in the same manner as in Example 1a except that the polymerization method was changed as follows:

(1) Main polymerization

40 kg/hour propylene, 5 NL/hour hydrogen, 1.0 g/hour catalyst slurry produced in (3) in Example 1a as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1, 000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 47°C at a polymerization pressure of 2.9 MPa/G with 10 kg/hour propylene and with ethylene and hydrogen such that the concentration of hydrogen in the gaseous phase became 0.07 mol%.

The resulting slurry was gasified and then subjected to gas-solid separation to give a propylene polymer (I-b).

The property values thereof after vacuum drying at 80°C are shown in Table 1.

[Example 4a]

A polymer was obtained in the same manner as in Example 1a except that the polymerization method was changed as follows:

(1) Main polymerization

40 kg/hour propylene, 5 NL/hour hydrogen, 1.0 g/hour catalyst slurry produced in (3) in Example 1a as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1,000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 51°C at a polymerization pressure of 2.9 MPa/G with 10 kg/hour propylene and with ethylene and hydrogen such that the concentration of hydrogen in the gaseous phase became 0.04 mol%.

The resulting slurry was gasified and then subjected to gas-solid separation to give a propylene polymer (I-d). The property values thereof after vacuum drying at 80°C are shown in Table 1.

[Example 5a]

A polymer was obtained in the same manner as in Example 1a except that the polymerization method was changed as follows:

(1) Main polymerization

40 kg/hour propylene, 5 NL/hour hydrogen, 1.0 g/hour catalyst slurryproduced in (3) in Example 1a as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1, 000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 47°C at a polymerization pressure of 2.9 MPa/G with 10 kg/hour propylene and with ethylene and hydrogen such that the concentration of hydrogen in the gaseous

phase became 0. 07 mol%.

The resulting slurry was gasified and then subjected to gas-solid separation to give a propylene polymer (I-e). The property values thereof after vacuum drying at 80°C are shown in Table 1.

[Comparative Example 1a]

(1) Production of solid catalyst support

300 g $SiO_2$ (manufactured by Dokai Kagakusha) was introduced into a 1-L side-arm flask and then 800 ml toluene was added to form slurry. Then, the slurry was transferred to a 5-L four-neck flask, and 260 ml toluene was added. 2,830 ml of MAO/toluene solution (10 wt% solution manufactured by Albemarle Corporation) was introduced. The mixture was stirred at room temperature for 30 minutes. The mixture was heated over 1 hour to 110°C and reacted for 4 hours. After the reaction was finished, the mixture was cooled to room temperature. After cooling, the supernatant toluene was removed and substituted with fresh toluene until the degree of substitution became 95%.

(2) Production of solid catalyst (supporting of the metal catalyst component on a catalyst support)

2.0 g of diphenylmethylene (3-tert-butyl-5-methylcyclopentadienyl) (2,7-di tert-butylfluorenyl) zirconium dichloride was weighed out in a 5-L four-neck flask in a glove box. The flask was put outside, and 0.46 L toluene and 1.4 L of the MAO/$SiO_2$/toluene slurry prepared in the above (1) were added thereto under nitrogen and stirred for 30 minutes for supporting. 99% of the toluene in the resulting diphenylmethylene (3-tert-butyl-5-methylcyclopentadienyl) (2,7-di tert-butylfluorenyl) zirconium dichloride/MAO/$SiO_2$/toluene slurry was substituted with n-heptane to give slurry in a final volume of 4.5 L. This operation was carried out at room temperature.

(3) Production of pre-polymerization catalyst

202 g of the solid catalyst component prepared in the above (2), 109 ml triethyl aluminum and 100 L heptane were introduced into an autoclave with an inner volume of 200 L equipped with a stirrer, and while the internal temperature was kept at a temperature of 15 to 20°C, 2,020 g ethylene was introduced and the mixture was reacted for 180 minutes under stirring. After the polymerization was finished, solid components were precipitated, and removal of the supernatant and washing with heptane were carried out twice. The resulting pre-polymerization catalyst was suspended again in refined heptane such that the concentration of the solid catalyst component became 2 g/L. This pre-polymerization catalyst contained 10 g polyethylene per g of the solid catalyst component.

(4) Main polymerization

40 kg/hour propylene, 4 NL/hour hydrogen, 2.0 g/hour catalyst slurry produced in (3) as the solid catalyst component and 4 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.0 MPa/G.

The resulting slurry was sent to a vessel polymerizer with an inner volume of 1, 000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 47°C at a polymerization pressure of 2.9 MPa/G with 10 kg/hour propylene and with ethylene and hydrogen such that the concentration of hydrogen in the gaseous phase became 0. 06 ml%.

The resulting slurry was gasified and then subjected to gas-solid separation to give a propylene polymer (I-f). The property values thereof after vacuum drying at 80°C are shown in Table 1.

[Comparative Example 2a]

A polymer was obtained in the same manner as in Comparative Example 1a except that the polymerization method was changed as follows:

(1) Main polymerization

40 kg/hour propylene, 4 NL/hour hydrogen, 2.0 g/hour catalyst slurry produced in (3) as the solid catalyst component and 4 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1,000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 46°C at a polymerization pressure of 2.9 MPa/G with 10 kg/hour propylene and with ethylene and hydrogen such that the concentration of hydrogen in the gaseous phase became 0. 06 mol%.

The resulting slurry was gasified and then subjected to gas-solid separation to give a propylene polymer (I-g). The property values thereof after vacuum drying at 80°C are shown in Table 1.

[Comparative Example 3a]

(1) Production of solid titanium catalyst component

952 g magnesium chloride anhydride, 4,420 ml decane and 3,906 g 2-ethylhexyl alcohol were heated at 130°C for 2 hours to form a uniform solution. 213 g phthalic anhydride was added to this solution and dissolved by further stirring at 130°C for 1 hour. The uniform solution thus obtained was cooled to 23°C, and 750 ml of this uniform solution was added dropwise over 1 hour to 2,000 ml titanium tetrachloride kept at -20°C. After dropwise addition, the temperature of the resulting mixture was increased over 4 hours to 110°C, and when the temperature reached 110°C, 52.2 g diisobutyl phthalate (DIBP) was added and then the mixture was kept at the same temperature under stirring for 2 hours. Then, the solid part was collected by filtration while in a hot state, and this solid part was suspended again in 2, 750 ml titanium tetrachloride and heated again at 110°C for 2 hours. After heating was finished, the solid part was collected again by filtration while in a hot state and then washed with decane at 110°C and hexane until the titanium compound became undetectable in the wash.

Although the solid titanium catalyst component prepared as described above was stored as hexane slurry, a part thereof was dried and examined for its catalyst composition. The solid titanium catalyst component contained 2 wt% titanium, 57 wt% chlorine, 21 wt% magnesium and 20 wt% DIBP.

(2) Production of pre-polymerization catalyst

56 g of the solid catalyst component, 20.7 ml triethyl aluminum, 7.0 ml 2-isobutyl-2-isopropyl-1,3-dimethoxypropane, and 80 L heptane were introduced into an autoclave with an inner volume of 200 L equipped with a stirrer, and while the internal temperature was kept at a temperature of 5°C, 560 g propylene was introduced and the mixture was reacted for 60 minutes under stirring. After the polymerization was finished, solid components were precipitated, and removal of the supernatant and washing with heptane were carried out twice. The resulting pre-polymerization catalyst was suspended again in refined heptane such that the concentration of the solid titanium catalyst component became 0.7 g/L. This pre-polymerization catalyst contained 10 g polypropylene per g of the solid titanium catalyst component.

(3) Main polymerization

30 kg/hour propylene, 220 NL/hour hydrogen, 0.3 g/hour catalyst slurry as the solid catalyst component, 3.3 ml/hour triethyl aluminum and 1.1 ml/hour dicyclopentyl dimethoxy silane were continuously supplied to a circular polymerizer with an inner volume of 58 L and polymerized in the polymerizer filled up in the absence of a gaseous phase. The temperature of the circular reactor was 70°C, and the pressure was 3.6 MPa/G.
The resulting slurry was sent to a vessel polymerizer with an inner volume of 100 L equipped with a stirrer and further polymerized. The polymerizer was fed with 15 kg/hour propylene and with hydrogen such that the concentration of hydrogen in the gaseous phase became 9.0 mol%. The polymerization was carried out at a polymerization temperature of 68°C at a pressure of 3.4 MPa/G.
The resulting slurry was transferred to an inserted tube with a capacity of 2.4 L ("inserted tube" in the present invention refers to a metering tube for metering a predetermined amount of slurry in order to transfer the slurry), and the slurry was gasified and then subjected to gas-solid separation. The resulting polypropylene homopolymer powder was sent to a 480-L gaseous phase polymerizer and then subjected to ethylene/propylene block copolymerization. Propylene, ethylene and hydrogen were fed continuously such that the gas composition in the gaseous phase polymerizer became ethylene/(ethylene + propylene) = 0.32 (molar ratio), and hydrogen/(ethylene + propylene) = 0.08 (molar ratio). The polymerization was carried out at a polymerization temperature of 70°C at a pressure of 0.9 MPa/G. The property values of the resulting propylene polymer (I-h) after vacuum drying at 80°C are shown in Table 1.

[Comparative Example 4a]

A polymer was obtained in the same manner as in Comparative Example 3a except that the polymerization method was changed as follows:

(1) Main polymerization

30 kg/hour propylene, 220 NL/hour hydrogen, 0.3 g/hour catalyst slurry as the solid catalyst component, 3.3 ml/hour triethyl aluminum and 1.1 ml/hour dicyclopentyl dimethoxy silane were continuously supplied to a circular polymerizer with an inner volume of 58 L and polymerized in the polymerizer filled up in the absence of a gaseous phase. The temperature of the circular reactor was 70°C, and the pressure was 3.6 MPa/G.
The resulting slurry was sent to a vessel polymerizer with an inner volume of 100 L equipped with a stirrer and further polymerized. The polymerizer was fed with 15 kg/hour propylene and with hydrogen such that the concentration of hydrogen in the gaseous phase became 9.0 mol%. The polymerization was carried out at a polymerization temperature of 68°C at a pressure of 3.4 MPa/G.
The resulting slurry was transferred to an inserted tube with a capacity of 2.4 L, and the slurry was gasified and then subjected to gas-solid separation. The resulting polypropylene homopolymer powder was sent to a 480-L gaseous phase polymerizer and then subjected to ethylene/propylene block copolymerization. Propylene, ethylene and hydrogen were fed continuously such that the gas composition in the gaseous phase polymerizer became ethylene/(ethylene + propylene) = 0.32 (molar ratio), and hydrogen/(ethylene + propylene) = 0.08 (molar ratio). The polymerization was carried out at a polymerization temperature of 70°C at a pressure of 1.3 MPa/G.
The property values of the resulting propylene polymer (I-i) after vacuum drying at 80°C are shown in Table 1.

[Comparative Example 5a]

A polymer was obtained in the same manner as in Example 1a except that the polymerization method was changed as follows:

(1) Main polymerization

40 kg/hour propylene, 5 NL/hour hydrogen, 0.9 g/hour catalyst slurry produced in (3) in Example 1a as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.
The resulting slurry was sent to a vessel polymerizer with an inner volume of 1, 000 L equipped with a stirrer and further polymerized. The polymerizer was fed with 45 kg/hour propylene and with hydrogen such that the concentration of hydrogen in the gaseous phase became 0.24 mol%. The polymerization was carried out at a polymerization temperature of 72°C at a pressure of 3.1 MPa/G.
The resulting slurry was sent to a vessel polymerizer with an inner volume of 500 L equipped with a stirrer and

further polymerized. The polymerizer was fed with 10 kg/hour propylene and with hydrogen such that the concentration of hydrogen in the gaseous phase became 0.24 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.24 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 51°C at a polymerization pressure of 2.9 MPa/G with 10 kg/hour propylene and with ethylene and hydrogen such that the concentration of hydrogen in the gaseous phase became 0.3 mol%.

The resulting slurry was gasified and then subjected to gas-solid separation to give a propylene polymer (I-j). The property values thereof after vacuum drying at 80°C are shown in Table 1.

[Reference Example 1]

(1) Production of solid catalyst support

300 g $SiO_2$ (manufactured by Dokai Kagakusha) was introduced into a 1-L side-arm flask and then 800 ml toluene was added to form slurry. Then, the slurry was transferred to a 5-L four-neck flask, and 260 ml toluene was added. 2,830 ml of MAO/toluene solution (10 wt% solution manufactured by Albemarle) was introduced. The mixture was stirred at room temperature for 30 minutes. The mixture was heated over 1 hour to 110°C and reacted for 4 hours. After the reaction was finished, the mixture was cooled to room temperature. After cooling, the supernatant toluene was removed and substituted with fresh toluene until the degree of substitution became 95%.

(2) Production of solid catalyst (supporting of the metal catalyst component on a catalyst support)

2.0 g of isopropyl (3-tert-butyl-5-methylcyclopentadienyl) (3,6-di tert-butylfluorenyl) zirconium dichloride was weighed out in a 5-L four-neck flask in a glove box. The flask was put outside, and 0.46 L toluene and 1.4 L of the MAO/$SiO_2$/toluene slurry prepared in the above (1) were added thereto under nitrogen and stirred for 30 minutes for supporting. 99% of the toluene in the resulting isopropyl (3-tert-butyl-5-methylcyclopentadienyl) (3,6-di tert-butylfluorenyl) zirconium dichloride/MAO/$SiO_2$/toluen slurry was substituted with n-heptane to give slurry in a final volume of 4.5 L. This operation was carried out at room temperature.

(3) Production of pre-polymerization catalyst

202 g of the solid catalyst component prepared in the above (2), 109 ml triethyl aluminum and 100 L heptane were introduced into an autoclave with an inner volume of 200 L equipped with a stirrer, and while the internal temperature was kept at a temperature of 15 to 20°C, 2020 g ethylene was introduced and the mixture was reacted for 180 minutes under stirring. After the polymerization was finished, solid components were precipitated, and removal of the supernatant and washing with heptane were carried out twice. The resulting pre-polymerization catalyst was suspended again in refined heptane such that the concentration of the solid catalyst component became 2 g/L. This pre-polymerization catalyst contained 10 g polyethylene per g of the solid catalyst component.

(4) Main polymerization

40 kg/hour propylene, 4 NL/hour hydrogen, 1.6 g/hour catalyst slurry produced in the above (3) as the solid catalyst component and 4 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1,000 L equipped with a stirrer and further polymerized. The polymerizer was fed with 45 kg/hour propylene and with hydrogen such that the concentration of hydrogen in the gaseous phase became 0.4 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.4 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.4 mol%. The polymerization was carried out at a polymerization temperature of 68°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.4 mol%. The polymerization was carried out at a polymerization temperature of 66°C at a polymerization pressure of 2.9 MPa/G.

The resulting slurry was gasified and then subjected to gas-solid separation to give a propylene homopolymer. The property values of the resulting propylene homopolymer (II-a) after vacuum drying at 80°C are shown in Table 1.

[Reference Example 2]

A polymer was obtained in the same manner as in Comparative Example 1a except that the polymerization method was changed as follows:

(1) Main polymerization

An SUS autoclave with an internal capacity of 30 L at 10°C sufficiently flushed with nitrogen was charged with 9 kg liquid propylene and charged with ethylene at a partial pressure of 0.8 MPa. The material was heated to 45°C under sufficient stirring, and a mixed solution of 0.6 g/heptane, 300 ml, and 0.5 ml triethyl aluminum was pressed as the solid catalyst component from a catalyst pot into the autoclave. The polymerization was carried out at 60°C for 20 minutes and then terminated by adding methanol. After the polymerization was terminated, the propylene was purged, then the atmosphere was replaced sufficiently by nitrogen, and the polymer (III-a) was separated. The property values of the resulting polymer (III-a) after vacuum drying at 80°C are shown in Table 1.

[Example 6a]

A polymer was obtained in the same manner as in Example 1a except that the polymerization method was changed as follows:

(1) Main polymerization

40 kg/hour propylene, 5 NL/hour hydrogen, 1.0 g/hour catalyst slurry produced in (3) in Example 1a as the solid catalyst component and 4 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1, 000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 54°C at a polymerization pressure of 2.9 MPa/G with 10 kg/hour propylene and with ethylene and hydrogen such that the concentration of hydrogen in the gaseous phase became 0.08 mol%.

The resulting slurry was gasified and then subjected to gas-solid separation to give a propylene polymer (I-k). The property values thereof after vacuum drying at 80°C are shown in Table 1.

[Example 7a]

A polymer was obtained in the same manner as in Example 1a except that the polymerization method was changed as follows:

(1) Main polymerization

40 kg/hour propylene, 5 NL/hour hydrogen, 1.0 g/hour catalyst slurry produced in (3) in Example 1a as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1,000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 51°C at a polymerization pressure of 2.9 MPa/G with 10 kg/hour propylene and with ethylene and hydrogen such that the concentration of hydrogen in the gaseous phase became 0.08 mol%.

The resulting slurry was gasified and then subjected to gas-solid separation to give a propylene polymer (I-1). The property values thereof after vacuum drying at 80°C are shown in Table 1.

[Example 8a]

A polymer was obtained in the same manner as in Example 1a except that the polymerization method was changed as follows:

(1) Main polymerization

40 kg/hour propylene, 5 NL/hour hydrogen, 1.0 g/hour catalyst slurry produced in (3) in Example 1a as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1,000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 47°C at a polymerization pressure of 2.9 MPa/G with 10 kg/hour propylene and with ethylene and hydrogen such that the concentration of hydrogen in the gaseous phase became 0. 07 mol%.

The resulting slurry was gasified and then subjected to gas-solid separation to give a propylene polymer (I-m).

The property values thereof after vacuum drying at 80°C are shown in Table 1.

[Comparative Example 6a]

A polymer was obtained in the same manner as in Comparative Example 1a except that the polymerization method was changed as follows:

(1) Main polymerization

40 kg/hour propylene, 4 NL/hour hydrogen, 2.0 g/hour catalyst slurry produced in (3) in Comparative Example 1a as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1, 000 L equipped with a stirrer and further polymerized. The polymerizer was fed with 45 kg/hour propylene and with hydrogen such that the concentration of hydrogen in the gaseous phase became 0.2 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.2 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 47°C at a polymerization pressure of 2.9 MPa/G with 10 kg/hour propylene and with ethylene and hydrogen such that the concentration of hydrogen in the gaseous phase became 0.06 mol%.

The resulting slurry was gasified and then subjected to gas-solid separation to give a propylene polymer (I-n). The property values thereof after vacuum drying at 80°C are shown in Table 1.

[Comparative Example 7a]

A polymer was obtained in the same manner as in Comparative Example 3a except that the polymerization method was changed as follows:

(1) Main polymerization

30 kg/hour propylene, 220 NL/hour hydrogen, 0.3 g/hour catalyst slurry as the solid catalyst component, 3.3 ml/hour triethyl aluminum and 1.1 ml/hour dicyclopentyl dimethoxysilane were continuously supplied to a circular polymerizer with an inner volume of 58 L and polymerized in the polymerizer filled up in the absence of a gaseous phase. The temperature of the circular reactor was 70°C, and the pressure was 3.6 MPa/G.

The resulting slurry was sent to a vessel polymerizer with an inner volume of 100 L equipped with a stirrer and further polymerized. The polymerizer was fed with 15 kg/hour propylene and with hydrogen such that the concentration of hydrogen in the gaseous phase became 9.0 mol%. The polymerization was carried out at a polymerization temperature of 68°C at a pressure of 3.4 MPa/G.

The resulting slurry was transferred to an inserted tube with a capacity of 2.4 L, and the slurry was gasified and then subjected to gas-solid separation. The resulting polypropylene homopolymer powder was sent to a 480-L gaseous phase polymerizer and then subjected to ethylene/propylene block copolymerization. Propylene, ethylene and hydrogen were fed continuously such that the gas composition in the gaseous phase polymerizer became ethylene/(ethylene + propylene) = 0.32 (molar ratio), and hydrogen/(ethylene + propylene) = 0.08 (molar ratio). The polymerization was carried out at a polymerization temperature of 70°C at a pressure of 0.5 MPa/G.

The property values of the resulting propylene polymer (I-o) after vacuum drying at 80°C are shown in Table 1.

[Example 9a]

A polymer was obtained in the same manner as in Example 1a except that the polymerization method was

changed as follows:

(1) Main polymerization

40 kg/hour propylene, 5 NL/hour hydrogen, 1.0 g/hour catalyst slurry produced in (3) in Example 1a as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1,000 L equipped with a stirrer and further polymerized. The polymerizer was fed with 45 kg/hour propylene and with hydrogen such that the concentration of hydrogen in the gaseous phase became 0.1 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.1 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.1 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 51°C at a polymerization pressure of 2.9 MPa/G with 10 kg/hour propylene and with ethylene and hydrogen such that the concentration of hydrogen in the gaseous phase became 0. 08 mol%.

The resulting slurry was gasified and then subjected to gas-solid separation to give a propylene polymer (I-p). The property values thereof after vacuum drying at 80°C are shown in Table 1.

[Comparative Example 8a]

A polymer was obtained in the same manner as in Comparative Example 1a except that the polymerization method was changed as follows:

(1) Main polymerization

40 kg/hour propylene, 4 NL/hour hydrogen, 2.0 g/hour catalyst slurry produced in (3) in Comparative Example 1a as the solid catalyst component and 4.0 ml/hour triethyl aluminum were continuously supplied to a tubular polymerizer with an inner volume of 58 L and polymerized in the polymerizer filled up in the absence of a gaseous phase. The temperature of the tubular reactor was 30°C, and the pressure was 3.2 MPa/G.

The resulting slurry was sent to a vessel polymerizer with an inner volume of 1, 000 L equipped with a stirrer and further polymerized. The polymerizer was fed with 45 kg/hour propylene and with hydrogen such that the concentration of hydrogen in the gaseous phase became 0.08 mol%. The polymerization was carried out at a polymerization temperature of 72°C at a pressure of 3.1 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.08 mol%. The polymerization was carried out at a polymerization temperature of 70°C at a pressure of 3.0 MPa/G.

The resulting slurry was sent to a vessel polymerizer with an inner volume of 500 L equipped with a stirrer and further polymerized. The polymerizer was fed with 10 kg/hour propylene and with hydrogen such that the concentration of hydrogen in the gaseous phase became 0.08 mol%. The polymerization was carried out at a polymerization temperature of 68°C at a pressure of 3.0 MPa/G.

The resulting slurry was sent to a vessel polymerizer with an inner volume of 500 L equipped with a stirrer and copolymerized. The polymerizer was fed at a polymerization temperature of 51°C at a polymerization pressure of 2.9 MPa/G with 10 kg/hour propylene and with ethylene and hydrogen such that the concentration of hydrogen in the gaseous phase became 0.07 mol%.

The resulting slurry was gasified and then subjected to gas-solid separation to give a propylene polymer (I-q). The property values thereof after vacuum drying at 80°C are shown in Table 1.

[Comparative Example 9a]

(1) Production of solid titanium catalyst component

952 g magnesium chloride anhydride, 4,420 ml decane and 3,906 g 2-ethylhexyl alcohol were heated at 130°C for 2 hours to form a uniform solution. 213 g phthalic anhydride was added to this solution and dissolved by further stirring at 130°C for 1 hour. The uniform solution thus obtained was cooled to 23°C, and 750 ml of this uniform solution was added dropwise over 1 hour to 2,000 ml titanium tetrachloride kept at -20°C. After dropwise addition, the temperature of the resulting mixture was increased over 4 hours to 110°C, and when the temperature reached 110°C, 52.2 g diisobutyl phthalate (DIBP) was added and then the mixture was kept at the same temperature under stirring for 2 hours. Then, the solid part was collected by filtration while in a hot state, and this solid part was suspended again in 2,750 ml titanium tetrachloride and heated again at 110°C for 2 hours. After heating was finished, the solid part was collected again by filtration while in a hot state and then washed with decane at 110°C and hexane until the titanium compound became undetectable in the wash.

Although the solid-titanium catalyst component prepared as described above was stored as hexane slurry, a part thereof was dried and examined for its catalyst composition. The solid titanium catalyst component contained 2 wt% titanium, 57 wt% chlorine, 21 wt% magnesium and 20 wt% DIBP.

(2) Production of pre-polymerization catalyst

56 g of the solid catalyst component, 9.6 ml triethyl aluminum, and 80 L heptane were introduced into an autoclave with an inner volume of 200 L equipped with a stirrer, and while the internal temperature was kept at a temperature of 5°C, 560 g propylene was introduced and the mixture was reacted for 60 minutes under stirring. After the polymerization was finished, solid components were precipitated, and removal of the supernatant and washing with heptane were carried out twice. The resulting pre-polymerization catalyst was suspended again in refined heptane such that the concentration of the transition metal catalyst component became 0.7 g/L. This pre-polymerization catalyst contained 10 g polypropylene per g of the transition metal catalyst component.

(3) Main polymerization

30 kg/hour propylene, 15 NL/hour hydrogen, 0.25 g/hour catalyst slurry as the solid catalyst component, 2.9 ml/hour triethyl aluminum and 0.8 ml/hour cyclohexyl methyl dimethoxy silane were continuously supplied to a circular polymerizer with an inner volume of 58 L and polymerized in the polymerizer filled up in the absence of a gaseous phase. The temperature of the circular reactor was 70°C, and the pressure was 3.6 MPa/G.

The resulting slurry was sent to a vessel polymerizer with an inner volume of 100 L equipped with a stirrer and further polymerized. The polymerizer was fed with 15 kg/hour propylene and with hydrogen such that the concentration of hydrogen in the gaseous phase became 0.9 mol%. The polymerization was carried out at a polymerization temperature of 70°C at a pressure of 3.2 MPa/G.

The resulting slurry was transferred to an inserted tube with a capacity of 2.4 L, and the slurry was gasified and then subjected to gas-solid separation. The resulting polypropylene homopolymer powder was sent to a 480-L gaseous phase polymerizer and then subjected to ethylene/propylene block copolymerization. Propylene, ethylene and hydrogen were fed continuously such that the gas composition in the gaseous phase polymerizer became ethylene/(ethylene + propylene) = 0.22 (molar ratio), and hydrogen/(ethylene + propylene) = 0.04 (molar ratio). The polymerization was carried out at a polymerization temperature of 70°C at a pressure of 1.0 MPa/G.

The property values of the resulting propylene polymer (I-r) after vacuum drying at 80°C are shown in Table 1.

[Comparative Example 10a]

A polymer was obtained in the same manner as in Comparative Example 9a except that the polymerization method was changed as follows:

(1) Main polymerization

30 kg/hour propylene, 15 NL/hour hydrogen, 0.25 g/hour catalyst slurry as the solid catalyst component, 2.9 ml/hour triethyl aluminum, and 0.8 ml/hour cyclohexylmethyl dimethoxy silane were continuously supplied to a circular polymerizer with an inner volume of 58 L and polymerized in the polymerizer filled up in the absence of a gaseous phase. The temperature of the circular reactor was 70°C, and the pressure was 3.6 MPa/G.

The resulting slurry was sent to a vessel polymerizer with an inner volume of 100 L equipped with a stirrer and

further polymerized. The polymerizer was fed with 15 kg/hour propylene and with hydrogen such that the concentration of hydrogen in the gaseous phase became 0.9 mol%. The polymerization was carried out at a polymerization temperature of 70°C at a pressure of 3.2 MPa/G.

The resulting slurry was transferred to an inserted tube with a capacity of 2.4 L, and the slurry was gasified and then subjected to gas-solid separation. The resulting polypropylene homopolymer powder was sent to a 480-L gaseous phase polymerizer and then subjected to ethylene/propylene block copolymerization. Propylene, ethylene and hydrogen were fed continuously such that the gas composition in the gaseous phase polymerizer became ethylene/(ethylene + propylene) = 0.31 (molar ratio), and hydrogen/(ethylene + propylene) = 0.04 (molar ratio). The polymerization was carried out at a polymerization temperature of 70°C at a pressure of 1.1 MPa/G.

The property values of the resulting propylene polymer (I-s) after vacuum drying at 80°C are shown in Table 1.

Table 1

| | Propylene polymer | MFR | D<sub>insol</sub> Amount Note 1) | Tm | Mw/Mn | [1,3+2,1] Note 2) | [C2] Note 3) | D<sub>sol</sub> Amount Note 1) | [η] | Mw/Mn | [C2] Note 4) |
|---|---|---|---|---|---|---|---|---|---|---|---|
| | | g/10min | wt% | °C | - | mol% | wt% | wt% | dl/g | - | mol% |
| Example 1a | I-a | 38 | 80 | 156 | 2.1 | <0.02 | 0.7 | 20 | 2.5 | 2.1 | 30 |
| Example 2a | I-b | 37 | 80 | 156 | 2.1 | <0.02 | 0.7 | 20 | 2.4 | 2.2 | 35 |
| Example 3a | I-c | 38 | 80 | 156 | 2.1 | <0.02 | 0.8 | 20 | 2.4 | 2.2 | 42 |
| Example 4a | I-d | 33 | 80 | 156 | 2.1 | <0.02 | 0.8 | 20 | 3.0 | 2.2 | 35 |
| Example 5a | I-e | 23 | 71 | 156 | 2.0 | <0.02 | 0.9 | 29 | 2.4 | 2.1 | 41 |
| Comparative Example 1a | I-f | 39 | 80 | 147 | 2.0 | 0.1 | 0.8 | 20 | 2.4 | 2.1 | 42 |
| Comp. Example 2a | I-g | 24 | 71 | 147 | 2.0 | 0.1 | 0.8 | 29 | 2.4 | 2.1 | 43 |
| Comp. Example 3a | I-h | 39 | 81 | 160 | 5.2 | <0.02 | 2.7 | 19 | 2.3 | 4.8 | 41 |
| Comp. Example 4a | I-i | 22 | 70 | 160 | 5.2 | <0.02 | 2.7 | 30 | 2.3 | 4.8 | 42 |
| Comp. Example 5a | I-j | 66 | 80 | 156 | 2.1 | <0.02 | 0.7 | 20 | 1.5 | 2.2 | 35 |
| Example 6a | I-k | 64 | 90 | 156 | 2.1 | <0.02 | 0.3 | 10 | 2.3 | 2.1 | 30 |
| Example 7a | I-1 | 62 | 90 | 156 | 2.1 | <0.02 | 0.4 | 10 | 2.3 | 2.2 | 35 |
| Example 8a | I-m | 60 | 90 | 156 | 2.1 | <0.02 | 0.4 | 10 | 2.4 | 2.2 | 42 |
| Comp. Example 6a | I-n | 60 | 90 | 147 | 2.2 | 0.1 | 0.4 | 10 | 2.4 | 2.1 | 42 |
| Comp. Example 7a | I-o | 63 | 89 | 160 | 5.3 | <0.02 | 1.4 | 11 | 2.3 | 4.9 | 41 |
| Example 9a | I-p | 4.6 | 80 | 156 | 2.2 | <0.02 | 0.6 | 20 | 2.3 | 2 | 34 |

(continued)

| | Propylene polymer | MFR | $D_{insol}$ | | | | | $D_{sol}$ | | | |
|---|---|---|---|---|---|---|---|---|---|---|---|
| | | | Amount Note 1) | Tm | Mw/Mn | [1,3+2,1] Note 2) | [C2] Note 3) | Amount Note 1) | [η] | Mw/Mn | [C2] Note 4) |
| | | g/10m in | wt% | °C | - | mol% | wt% | wt% | dl/g | - | mol% |
| Comp. Example 8a | I-q | 5.0 | 80 | 147 | 2.1 | 0.1 | 0.7 | 20 | 2.3 | 2.1 | 34 |
| Comp. Example 9a | I-r | 4.5 | 81 | 160 | 6.5 | <0.02 | 3.7 | 19 | 2.2 | 5.5 | 34 |
| Comp. Example 10a | I-s | 4.8 | 79 | 160 | 6.4 | <0.02 | 4.0 | 21 | 2.3 | 5.8 | 42 |
| Amount Note 11 | Tm | Mw/Mn | [1,3+2,1] Note 2) | [C2] Note 3) | Amount Note 1) | [η] | Mw/Mn | [C2] Note 4) | | | |
| g/10m in | wt% | °C | - | mol% | wt% | wt% | dl/g | - | mol% | | |
| Referen ce Example 1 | II-a | - | >99.5 | 158 | 2.2 | <0.02 | <0.1 | <0.5 | - | - | - |
| Referen ce Example 2 | III-a | - | <0.1 | - | - | - | - | >99.9 | 2.5 | 2.1 | 35 |

Note 1) Percentage (wt%) in propylene polymer
Note 2) Total amount (mol%) of 2,1-bond and 1,3-bond in $D_{insol}$
Note 3) Concentration (wt%) of ethylene-derived skeleton in $D_{insol}$
Note 4) Concentration (wt%) of ethylene-derived skeleton in $D_{sol}$

[Example 1b]

0.1 part by weight of a heat stabilizer IRGANOX1010 (registered trademark) (Ciba Geigy), 0.1 part by weight of a heat stabilizer IRGAFOS168 (registered trademark) (Ciba Geigy) and 0.1 part by weight of calcium stearate were mixed, in a tumbler, with 100 parts by weight of the propylene polymer (I-a) produced in Example 1a and then melt-kneaded in a twin-screw extruder to prepare a pellet-shaped polypropylene resin composition which was then formed into an ASTM test specimen by an injection molding machine. The mechanical physical properties of the molded product are shown in Table 2.

<Melt-kneading conditions>

Same-direction-twin-screw kneader: Product Number NR2-36, manufactured by Nakatani Kikai
Kneading temperature: 190°C
Number of revolution of screw: 200 rpm
Number of revolution of feeder: 400 rpm

<Conditions for injection molding of ASTM test specimen>

Injection molding machine: Product Number IS100, manufactured by Toshiba Machine Co., Ltd.
Cylinder temperature: 190°C
Die temperature: 40°C

[Example 2b]

An ASTM test specimen was prepared by melt-kneading in the same manner as in Example 1b except that the propylene polymer (I-a) was changed into the propylene polymer (I-b) produced in Example 2a. The mechanical physical properties of the molded product are shown in Table 2.

[Example 3b]

An ASTM test specimen was prepared by melt-kneading in the same manner as in Example 1b except that the propylene polymer (I-a) was changed into the propylene polymer (I-c) produced in Example 3a. The mechanical physical properties of the molded product are shown in Table 2.

[Example 4b]

An ASTM test specimen was prepared by melt-kneading in the same manner as in Example 1b except that the propylene polymer (I-a) was changed into the propylene polymer (I-d) produced in Example 4a. The mechanical physical properties of the molded product are shown in Table 2.

[Example 5b]

An ASTM test specimen was prepared by melt-kneading in the same manner as in Example 1b except that the propylene polymer (I-a) was changed into the propylene polymer (I-e) produced in Example 5a. The mechanical physical properties of the molded product are shown in Table 2.

[Comparative Example 1b]

An ASTM test specimen was prepared by melt-kneading in the same manner as in Example 1b except that the propylene polymer (I-a) was changed into the propylene polymer (I-f) produced in Comparative Example 1a. The mechanical physical properties of the molded product are shown in Table 2.

[Comparative Example 2b]

An ASTM test specimen was prepared by melt-kneading in the same manner as in Example 1b except that the propylene polymer (I-a) was changed into the propylene polymer (I-g) produced in Comparative Example 2a. The mechanical physical properties of the molded product are shown in Table 2.

[Comparative Example 3b]

An ASTM test specimen was prepared by melt-kneading in the same manner as in Example 1b except that the propylene polymer (I-a) was changed into the propylene polymer (I-h) produced in Comparative Example 3a. The mechanical physical properties of the molded product are shown in Table 2.

[Comparative Example 4b]

An ASTM test specimen was prepared by melt-kneading in the same manner as in Example 1b except that the propylene polymer (I-a) was changed into the propylene polymer (I-i) produced in Comparative Example 4a. The mechanical physical properties of the molded product are shown in Table 2.

[Comparative Example 5b]

An ASTM test specimen was prepared by melt-kneading in the same manner as in Example 1b except that the propylene polymer (I-a) was changed into the propylene polymer (I-j) produced in Comparative Example 5a. The mechanical physical properties of the molded product are shown in Table 2.

[Example 6b]

0.1 part by weight of a heat stabilizer IRGANOX1010 (registered trademark) (Ciba Geigy), 0.1 part by weight of a heat stabilizer IRGAFOS168 (registered trademark) (Ciba Geigy) and 0.1 part by weight of calcium stearate were mixed, in a tumbler, with 100 parts by weight of a combination consisting of 80 parts by weight of the propylene homopolymer (II-a) produced in Reference Example 1 and 20 parts by weight of the propylene/ethylene random copolymer rubber (III-a) produced in Reference Example 2 and then melt-kneaded in a twin-screw extruder to prepare a pellet-shaped polypropylene resin composition which was then formed into an ASTM test specimen by an injection molding machine. The mechanical physical properties of the molded product are shown in Table 2.

<Melt-kneading conditions>

Same-direction-twin-screw kneader: Product Number NR2-36, manufactured by Nakatani Kikai
Kneading temperature: 190°C
Number of revolution of screw: 200 rpm
Number of revolution of feeder: 400 rpm

<Conditions for injection molding of ASTM test specimen>

Injection molding machine: Product Number IS100, manufactured by Toshiba Machine Co., Ltd.

Cylinder temperature: 190°C

Die temperature: 40°C

[Table 2]

| | Propylene polymer | MFR | Mechanical physical properties | | |
|---|---|---|---|---|---|
| | | | breaking elongation | flexural modulus | Izod impact strength (23°C) |
| | | g/10mi n | % | MPa | J/m |
| Example 1b | I-a | 38 | 350 | 1080 | 490 |
| Example 2b | I-b | 37 | 210 | 1100 | 130 |
| Example 3b | I-c | 38 | 100 | 1120 | 80 |
| Example 4b | 1-d | 33 | 150 | 1130 | 110 |
| Example 5b | I-e | 23 | >300 | 790 | 640 |
| Example 6b | II-a/III-a | 35 | 220 | 1110 | 145 |
| Comparati ve Example 1b | I-f | 39 | 110 | 840 | 75 |
| Comparati ve Example 2b | I-g | 24 | >300 | 670 | 610 |
| Comparati ve Example 3b | I-h | 39 | 95 | 1110 | 70 |
| Comparati ve Example 4b | I-i | 22 | >300 | 760 | 600 |
| Comparati ve Example 5b | I-j | 66 | 40 | 1050 | 40 |

[Example 1c]

0.1 part by weight of a heat stabilizer IRGANOX1010 (registered trademark) (Ciba Geigy), 0.1 part by weight of a heat stabilizer IRGAFOS168 (registered trademark) (Ciba Geigy) and 0.1 part by weight of calcium stearate were mixed, in a tumbler, with 100 parts by weight of a combination consisting of 60 parts by weight of the propylene polymer (I-k) produced in Example 6a, 20 parts by weight of an ethylene/octane copolymer rubber (IV-a) (Engage 8842 (registered trademark) manufactured by DuPont Dow Elastomer) and 20 parts by weight of talc (High Filler #5000PJ (registered trademark)manufactured by Matsumura Sangyo) and then melt-kneaded in a twin-screw extruder to prepare a pellet-shaped polypropylene resin composition which was then formed into an ASTM test specimen by an inj ection moldingmachine. The mechanical physical properties of the molded product are shown in Table 3.

<Melt-kneading conditions>

Same-direction-twin-screw kneader:Product Number NR2-36, manufactured by Nakatani Kikai
Kneading temperature: 190°C
Number of revolution of screw: 200 rpm
Number of revolution of feeder: 400 rpm

<Conditions for injection molding of ASTM test specimen>

Injection molding machine: Product Number IS100, manufactured by Toshiba Machine Co., Ltd.
Cylinder temperature: 190°C
Die temperature: 40°C

[Example 2c]

A test specimen was prepared in the same manner as in Example 1c except that 60 parts by weight of the propylene polymer (I-k) were changed into 60 parts by weight of the propylene polymer (I-1) produced in Example 7a. The mechanical physical properties of the resulting molded product are shown in Table 3.

[Example 3c]

A test specimen was prepared in the same manner as in Example 1c except that 60 parts by weight of the propylene polymer (I-k) were changed into 60 parts by weight of the propylene polymer (I-m) produced in Example 8a. The mechanical physical properties of the resulting molded product are shown in Table 3.

[Comparative Example 1c]

A test specimen was prepared in the same manner as in Example 1c except that 60 parts by weight of the propylene polymer (I-k) were changed into 60 parts by weight of the propylene polymer (I-n) produced in Comparative Example 6a. The mechanical physical properties of the resulting molded product are shown in Table 3.

[Comparative Example 2c]

A test specimen was prepared in the same manner as in Example 1c except that 60 parts by weight of the propylene polymer (I-k) were changed into 60 parts by weight of the propylene polymer (I-o) produced in Comparative Example 7a. The mechanical physical properties of the resulting molded product are shown in Table 3.

[Comparative Example 3c]

0.1 part by weight of a heat stabilizer IRGANOX1010 (registered trademark) (Ciba Geigy), 0.1 part by weight of a heat stabilizer IRGAFOS168 (registered trademark) (Ciba Geigy) and 0.1 part by weight of calcium stearate weremixed, in a tumbler, with 100 parts by weight of a combination consisting of 57 parts by weight of the propylene polymer (I-o) produced in Comparative Example 7a, 23 parts by weight of an ethylene/octane copolymer rubber (IV-a) (Engage 8842 (registered trademark) manufactured by DuPont Dow Elastomer) and 20 parts by weight of talc (High Filler #5000PJ (registered trademark)manufactured by Matsumura Sangyo) and then melt-kneaded in a twin-screw extruder in the same manner as in Example 7 to prepare a pellet-shaped polypropylene resin composition which was then formed into an ASTM test specimen by an injection molding machine. The mechanical physical properties of the molded product are shown in Table 3.

[Table 3]

| | Example 1c | Example 2c | Example 3c | Comparative Example 1c | Comparative Example 2c | Comparative Example 3c |
|---|---|---|---|---|---|---|
| Propylene polymer (I-k) | 60 | | | | | |
| Propylene polymer (I-l) | | 60 | | | | |
| Propylene polymer (I-m) | | | 60 | | | |
| Propylene polymer (I-n) | | | | 60 | | |
| Propylene polymer (I-o) | | | | | 60 | 57 |
| Ethylene/octane copolymer rubber (IV-a) | 20 | 20 | 20 | 20 | 20 | 23 |
| Talc (V) | 20 | 20 | 20 | 20 | 20 | 20 |

(continued)

| | | | Example 1c | Example 2c | Example 3c | Comparative Example 1c | Comparative Example 2c | Comparative Example 3c |
|---|---|---|---|---|---|---|---|---|
| Article | MFR | g/10min | 29 | 30 | 28 | 28 | 30 | 26 |
| | breaking elongation | % | 270 | 280 | 260 | 250 | 90 | 320 |
| | flexural modulus | MPa | 1930 | 1920 | 1940 | 1800 | 2150 | 1890 |
| | Rockwell hardness | R | 61 | 56 | 53 | 49 | 55 | 45 |
| | low-temperature brittle temperature | °C | -23 | -28 | -35 | -32 | -22 | -28 |

[Example 1d)

0.1 part by weight of a heat stabilizer IRGANOX1010 (registered trademark) (Ciba Geigy), 0.1 part by weight of a heat stabilizer IRGAFOS168 (registered trademark) (Ciba Geigy) and 0.1 part by weight of calcium stearate were mixed, in a tumbler, with 100 parts by weight of the propylene polymer (I-p) produced in Example 9a and then melt-kneaded in a twin-screw extruder to prepare a pellet-shaped polypropylene resin composition which was then formed into a cast film by a T-die extruder [Product Number GT-25A, manufactured by Plastic Kogaku Kenkyusho]. The mechanical physical properties of the cast film are shown in Table 4.

<Melt-kneading conditions>

Same-direction-twin-screw kneader: Product Number NR2-36, manufactured by Nakatani Kikai
Kneading temperature: 210°C
Number of revolution of screw: 200 rpm
Number of revolution of feeder: 400 rpm

<Film molding>

25 mmΦT-die extruder: Product Number GT-25A, manufactured by Plastic Kogaku Kenkyusho
Extrusion temperature: 230°C
Chill roll temperature: 30°C
Take-over speed: 4.0 m/min
Film thickness: 70 μm

[Comparative Example 1d]

A film was prepared in the same manner as in Example 1d except that 100 parts by weight of the propylene polymer (I-p) were changed into 100 parts by weight of the propylene polymer (I-q) produced in Comparative Example 8a. The physical properties of the resulting film are shown in Table 4.

[Comparative Example 2d]

A film was prepared in the same manner as in Example 1d except that 100 parts by weight of the propylene

polymer (I-p) were changed into 100 parts by weight of the propylene polymer (I-r) produced in Comparative Example 8a. The physical properties of the resulting film are shown in Table 4.

[Comparative Example 3d]

A film was prepared in the same manner as in Example 1d except that 100 parts by weight of the propylene polymer (I-p) were changed into 100 parts by weight of the propylene polymer (I-s) produced in Comparative Example 8a. The physical properties of the resulting film are shown in Table 4.

[Table 4]

| | | | Example 1d | Comparat ive Example 1d | Comparat ive Example 2d | Comparat ive Example 3d |
|---|---|---|---|---|---|---|
| Propylene polymer | | | I-p | I-q | I-r | I-s |
| Product (70 μm cast film) | Young's modulus (MD) at 23°C | MPa | 820 | 770 | 740 | 760 |
| | Young' s modulus (MD) at 60°C | MPa | 320 | 250 | 210 | 230 |
| | Impact strength at 0°C | J/m | 33 | 31 | 39 | 37 |
| | Impact strength at -10°C | J/m | 28 | 16 | 14 | 15 |
| | HAZE | % | 9.0 | 8.7 | 12.0 | 14.5 |
| | heat sealing strength at 170°C | N/15mm | 9.8 | 19.4 | 5.0 | 5.5 |

Industrial Applicability

The propylene polymer used the present invention is characterized in that its n-decane insoluble part ($D_{insol}$) has a high melting point and its decane soluble part ($D_{sol}$) has a high molecular weight and narrow compositional distribution, and the propylene polymer is excellent in heat resistance, transparency, impact resistance and heat sealing properties for use in film. Accordingly, the propylene polymer of the present invention can be used suitably in films and sheets, in particular high retort film for packaging food.

## Claims

**1.** A film or sheet obtained by molding a propylene polymer (A) consisting of 10 to 40 wt% room-temperature n-decane soluble part ($D_{sol}$) and 60 to 90 wt% room-temperature n-decane insoluble part ($D_{insol}$),
wherein the propylene polymer comprises skeletons derived from propylene (MP) and at least one kind of olefin (MX) selected from ethylene and C4 or more $\alpha$-olefins, and
wherein the propylene polymer satisfies all of the following requirements [1] to [5] and [1'] to [4']:

[1] the molecular weight distribution (Mw/Mn) of both $D_{sol}$ and $D_{insol}$ as determined by GPC is 4.0 or less;
[2] the melting point (Tm) of $D_{insol}$ is 156°C or more;
[3] the sum of the 2,1-bond content and the 1,3-bond content in $D_{insol}$ is 0.05 mol% or less;
[4] the intrinsic viscosity [η] (dl/g)of $D_{sol}$ satisfies the relationship $2.2 < [\eta] \leq 6.0$;
[5] the concentration of skeletons derived from the olefin (MX) in $D_{insol}$ is 3.0 wt% or less;
[1'] the ratio Mw/Mn of the weight-average molecular weight (Mw) to the number-average molecular weight (Mn) of the component soluble in orthodichlorobenzene at 0°C is 1.0 to 4.0;
[2'] the weight-average molecular weight (Mw) of the component soluble in orthodichlorobenzene at 0°C is

$1.8x10^5$ or more;

[3'] the ratio Mw/Mn of the weight-average molecular weight (Mw) to the number-average molecular weight (Mn) of the component inosoluble in orthodichlorobenzene at 90°C and soluble in orthodichlorobenzene at 135°C is 1.0 to 4.0; and

_[4'] the skeletons, in $D_{sol}$ of the propylene polymer, derived from at least one kind of olefin (MX) selected from ethylene and C4 or more $\alpha$-olefins (MX) contain an ethylene-derived skeleton, and the ethylene-derived skeleton is contained in $D_{sol}$ in an amount of 25 mol% to 60 mol%.

**2.** The film or sheet according to claim 1, wherein the propylene polymer is obtained by carrying out the following two steps 1 and 2 successively:

[Step 1] step wherein propylene (MP), and if necessary at least one kind of olefin (MX) selected from ethylene and C4 or more $\alpha$-olefins, are polymerized in the presence of a catalyst containing a metallocene compound, thereby producing a polymer wherein the concentration of room-temperature n-decane soluble part($D_{sol}$) is 0.5 wt% or less; and

[Step 2] step wherein propylene (MP) and at least one kind of olefin (MX) selected from ethylene and C4 or more $\alpha$-olefins are copolymerized in the presence of a catalyst containing a metallocene compound, thereby producing a copolymer wherein room-temperature n-decane insoluble part (Dinsol) is 5.0 wt% or less.

**3.** The film or sheet according to claim 2, wherein the metallocene compound is represented by the following general formula [I]:

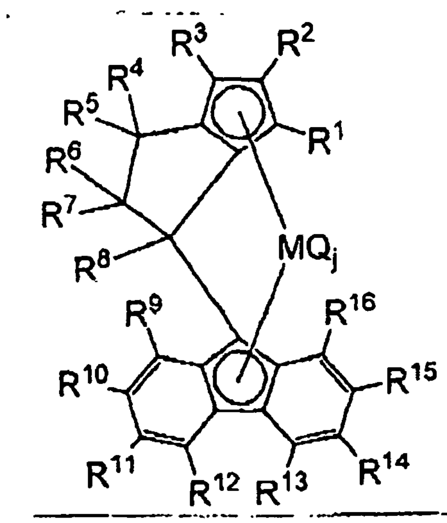

· · · · [I]

wherein $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$ and $R^{16}$ are selected from a hydrogen atom, a hydrocarbon group and a silicon-containing group and may be the same or different, and the adjacent groups $R^1$ to $R^{16}$ may be bound to one another to form a ring, provided that $R^2$ is not an aryl group; M is the group IV transition metal; Q is selected from the group consisting of a halogen atom, a hydrocarbon group, an anion ligand, and a neutral ligand capable of coordination with a lone pair of electrons; j is an integer of 1 to 4, and when j is an integer of 2 or more, a plurality of Qs may be the same or different.

**4.** The film or sheet according to any of claims 1 to 3, which is a film or a sheet constituting a retort pouch.

**5.** A retort pouch comprising the film or sheet according to any of claims 1 to 3 as a constituent.

**6.** The retort pouch according to claim 5, wherein the film according to any of claim 1 to 3 is a sealant.

## Patentansprüche

**1.** Film/Folie oder Blatt, erhalten durch Formen eines Propylenpolymers (A), das besteht aus 10 bis 40 Gew.% eines bei Raumtemperatur in in-Decan löslichen Teils ($D_{sol}$) und 60 bis 90 Gew.% eines bei Raumtemperatur in n-Decan

unlöslichen Teils ($D_{insol}$),
worin das Propylenpolymer Gerüsteinheiten umfasst, die aus Propylen (MP) und mindestens einer Art von Olefin (MX) erhalten sind, ausgewählt aus Ethylen und C4- oder höheren $\alpha$-Olefinen, und
worin das Propylenpolymer alle der folgenden Erfordernisse [1] bis [5] und [1'] bis [4'] erfüllt:

[1] die Molekulargewichtsverteilung (Mw/Mn) von sowohl ($D_{sol}$) als auch ($D_{insol}$), bestimmt mittels GPC, beträgt 4,0 oder weniger;
[2] der Schmelzpunkt (Tm) von ($D_{insol}$) beträgt 156°C oder mehr;
[3] die Summe des 2,1-Bindungsgehalts und des 1,3-Bindungsgehalts in ($D_{insol}$) beträgt 0,05 Mol% oder weniger;
[4] die Grenzviskosität [η] (dl/g) von ($D_{sol}$) erfüllt die Beziehung $2{,}2 < [\eta] \leq 6{,}0$;
[5] die Konzentration der Gerüsteinheiten, die aus dem Olefin (MX) erhalten sind, in ($D_{insol}$) beträgt 3,0 Gew.% oder weniger;
[1'] das Verhältnis Mw/Mn des gewichtsgemittelten Molekulargewichts (Mw) zum zahlengemittelten Molekulargewicht (Mn) der Komponente, die bei 0°C in Orthodichlorbenzol löslich ist, beträgt 1,0 bis 4,0;
[2'] das gewichtsgemittelte Molekulargewicht (Mw) der Komponente, die bei 0°C in Orthodichlorbenzol löslich ist, beträgt $1{,}8 \times 10^5$ oder mehr;
[3'] das Verhältnis Mw/Mn des gewichtsgemittelten Molekulargewichts (Mw) zum zahlengemittelten Molekulargewicht (Mn) der Komponente, die bei 90°C in Orthodichlorbenzol unlöslich ist und die bei 135°C in Orthodichlorbenzol löslich ist, beträgt 1,0 bis 4,0; und
[4'] die Gerüsteinheiten in $D_{sol}$ des Propylenpolymers, die aus mindestens einer Art von Olefin (MX), ausgewählt aus Ethylen oder C4 oder höheren $\alpha$-Olefinen (MX), erhalten sind, enthalten eine aus Ethylen erhaltene Gerüsteinheit, und die aus Ethylen erhaltene Gerüsteinheit ist in $D_{sol}$ in einer Menge von 25 Mol% bis 60 Mol% enthalten.

**2.** Film/Folie oder Blatt gemäß Anspruch 1, worin das Propylenpolymer erhalten ist durch sukzessives Durchführen der folgenden zwei Schritte 1 und 2:

[Schritt 1] ein Schritt, worin Propylen (MP), und, falls notwendig, mindestens eine Art von Olefin (MX), ausgewählt aus Ethylen und C4 oder höheren $\alpha$-Olefinen, in der Gegenwart eines Katalysators, der eine Metallocenverbindung enthält, polymerisiert werden, wodurch ein Polymer hergestellt wird, worin die Konzentration des bei Raumtemperatur in n-Decan löslichen Teils ($D_{sol}$) 0,5 Gew.% oder weniger beträgt; und
[Schritt 2] ein Schritt, worin Propylen (MP) und mindestens eine Art von Olefin (MX), ausgewählt aus Ethylen und C4 oder höheren $\alpha$-Olefinen, in der Gegenwart eines Katalysators, der eine Metallocenverbindung enthält, copolymerisiert werden, wodurch ein Copolymer hergestellt wird, worin der Anteil des bei Raumtemperatur in n-Decan unlöslichen Teils ($D_{insol}$) 5,0 Gew.% oder weniger beträgt.

**3.** Film/Folie oder Blatt gemäß Anspruch 2, worin die Metallocenverbindung durch die folgende allgemeine Formel [I] dargestellt wird:

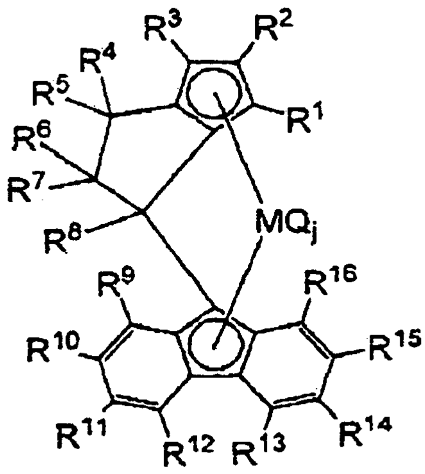

[I]

worin $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$ und $R^{16}$ ausgewählt sind aus einem Wasserstoffatom, einer Kohlenwasserstoffgruppe und einer siliziumhaltigen Gruppe und gleich oder verschieden sein können, und die benachbarten Gruppen $R^1$ bis $R^{16}$ miteinander verbunden sein können, um einen Ring zu bilden, vorausgesetzt, dass $R^2$ keine Arylgruppe ist; M ein Übergangsmetall der Gruppe IV ist, Q ausgewählt ist aus der Gruppe bestehend aus einem Halogenatom, einer Kohlenwasserstoffgruppe, einem Anion-Liganden und einem neutralen Liganden, der zur Koordination mit einem einsamen Elektronenpaar befähigt ist; j eine ganze Zahl von 1 bis 4 ist, und wenn j eine ganze Zahl von 2 oder größer ist, die mehreren Q gleich oder verschieden sein können.

**4.** Film/Folie oder Blatt gemäß irgendeinem der Ansprüche 1 bis 3, welches ein Film/eine Folie oder ein Blatt ist, das einen Folienbeutel (retort pouch) aufbaut.

**5.** Folienbeutel, umfassend den Film/die Folie oder ein Blatt gemäß irgendeinem der Ansprüche 1 bis 3 als ein Aufbauelement.

**6.** Folienbeutel gemäß Anspruch 5, worin der Film/die Folie gemäß irgendeinem der Ansprüche 1 bis 3 ein Abdichtungsmittel ist.

**Revendications**

**1.** Film ou feuille obtenu en moulant un polymère de propylène (A) consistant en 10 à 40 % en poids d'un élément soluble dans du n-décane à température ambiante ($D_{sol}$) et en 60 à 90 % en poids d'un élément insoluble dans du n-décane à température ambiante ($D_{insol}$),
dans lequel le polymère de propylène comprend des squelettes obtenus à partir de propylène (MP) et d'au moins une sorte d'oléfine (MX) sélectionnée à partir de l'éthylène et d'$\alpha$-oléfines C4 ou plus, et
dans lequel le polymère de propylène satisfait à la totalité des conditions suivantes [1] à [5] et [1'] à [4'] :

[1] la distribution de masse moléculaire (Mw/Mn) tant de $D_{sol}$ que de $D_{insol}$ telle que déterminée par GPC est de 4,0 ou moins ;
[2] le point de fusion (Tm) de $D_{insol}$ est de 156 °C ou plus ;
[3] la somme de la teneur en liaison 2,1 et de la teneur en liaison 1,3 dans $D_{insol}$ est de 0,05 % en mole ou moins ;
[4] la viscosité intrinsèque [$\eta$] (dl/g) de $D_{sol}$ satisfait à la relation $2,2 < [\eta] \leq 6,0$ ;
[5] la concentration de squelettes obtenus à partir de l'oléfine (MX) dans $D_{insol}$ est de 3,0 % en poids ou moins ;
[1'] le rapport Mw/Mn de la masse moléculaire moyenne en poids (Mw) sur la masse moléculaire moyenne en nombre (Mn) du composant soluble dans de l'ortho-dichlorobenzène à 0 °C est de 1,0 à 4,0 ;
[2'] la masse moléculaire moyenne en poids (Mw) du composant soluble dans de l'ortho-dichlorobenzène à 0 °C est de $1,8 \times 10^5$ ou plus ;
[3'] le rapport Mw/Mn de la masse moléculaire moyenne en poids (Mw) sur la masse moléculaire moyenne en nombre (Mn) du composant insoluble dans de l'ortho-dichlorobenzène à 90 °C et soluble dans de l'ortho-dichlorobenzène à 135 °C est de 1,0 à 4,0 ; et
[4'] les squelettes, dans $D_{sol}$ du polymère de propylène, obtenus à partir d'au moins une sorte d'oléfine (MX) sélectionnée à partir de l'éthylène et d'$\alpha$-oléfines C4 ou plus (MX) contiennent un squelette obtenu à partir d'éthylène, et le squelette obtenu à partir d'éthylène est contenu dans $D_{sol}$ en une quantité de 25 % en mole à 60 % en mole.

**2.** Film ou feuille selon la revendication 1, dans lequel le polymère de propylène est obtenu en exécutant successivement les deux étapes suivantes 1 et 2 :

[Étape 1] étape dans laquelle du propylène (MP), et si nécessaire au moins une sorte d'oléfine (MX) sélectionnée à partir de l'éthylène et d'$\alpha$-oléfines C4 ou plus, est polymérisé en présence d'un catalyseur contenant un composé de métallocène, produisant de ce fait un polymère dans lequel la concentration de l'élément soluble dans du n-décane à température ambiante ($D_{sol}$) est de 0,5 % en poids ou moins ; et
[Étape 2] étape dans laquelle du propylène (MP) et au moins une sorte d'oléfine (MX) sélectionnée à partir de l'éthylène et d'$\alpha$-oléfines C4 ou plus sont copolymérisés en présence d'un catalyseur contenant un composé de métallocène, produisant de ce fait un copolymère dans lequel un élément insoluble dans du n-décane à température ambiante ($D_{insol}$) est de 5,0 % en poids ou moins.

**3.** Film ou feuille selon la revendication 2, dans lequel le composé de métallocène est représenté par la formule

générale suivante [I] :

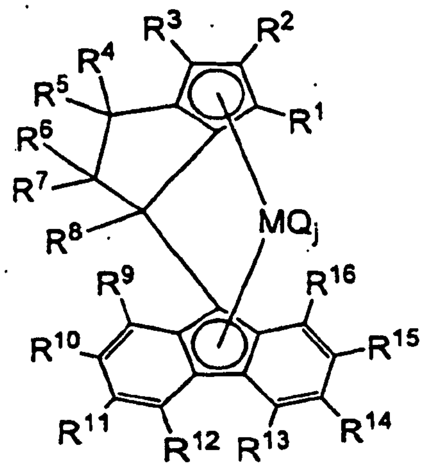

... [I]

dans laquelle $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$ et $R^{16}$ sont sélectionnés à partir d'un atome d'hydrogène, d'un groupe hydrocarbure et d'un groupe contenant du silicium et peuvent être les mêmes ou différents, et les groupes adjacents $R^1$ à $R^{16}$ peuvent être liés les uns aux autres pour former un composé cyclique, à condition que $R^2$ ne soit pas un groupe aryle ; M est un métal de transition du groupe IV ; Q est sélectionné à partir du groupe constitué par un atome d'halogène, un groupe hydrocarbure, un ligand d'anion et un ligand neutre susceptible de coordination avec un couple solitaire d'électrons ; j est un entier de 1 à 4, et quand j est un entier de 2 ou plus, une pluralité de Q peuvent être les mêmes ou différents.

4. Film ou feuille selon l'une quelconque des revendications 1 à 3, qui est un film ou une feuille constituant une poche souple.

5. Poche souple comprenant le film ou la feuille selon l'une quelconque des revendications 1 à 3 en tant que constituant.

6. Poche souple selon la revendication 5, dans laquelle le film selon l'une quelconque des revendications 1 à 3 est un agent d'étanchéité.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5202152 A
- JP 2003147035 A
- JP 2004051801 A
- WO 2002074855 A
- WO 2004087775 A
- JP 2078687 A
- JP 2167305 A
- JP 2024701 A
- JP 3103407 A
- US 4960878 A
- US 5041584 A
- JP 1501950 A
- JP 1502036 A
- JP 3179005 A
- JP 3179006 A
- JP 3207703 A
- JP 3207704 B
- US 5321106 A
- JP 2004051676 A


### Non-patent literature cited in the description


- *J. Org. Chem.,* 1989, vol. 54, 4981-4982
- *J. Polym. Sci.,* 1970, vol. 8, 1803
- *Makromol. Chem.,* 1976, vol. 177, 213
- **CARMAN et al.** *Rubber Chem. Technol.,* 1971, vol. 44, 781